(19) Europäisches Patentamt
European Patent Office
Office européen des brevets

(11) **EP 4 401 007 A1**

(12) **EUROPEAN PATENT APPLICATION**
published in accordance with Art. 153(4) EPC

(43) Date of publication:
**17.07.2024 Bulletin 2024/29**

(21) Application number: **22874756.4**

(22) Date of filing: **22.09.2022**

(51) International Patent Classification (IPC):
**G06N 3/04** (2023.01)

(86) International application number:
**PCT/CN2022/120497**

(87) International publication number:
**WO 2023/051369 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 CN 202111166585**

(71) Applicant: **Huawei Technologies Co., Ltd.**
**Shenzhen, Guangdong 518129 (CN)**

(72) Inventors:
• **WAN, Xingchen**
**Shenzhen, Guangdong 518129 (CN)**
• **RU, Binxin**
**Shenzhen, Guangdong 518129 (CN)**
• **ESPERANCA, Pedro**
**Shenzhen, Guangdong 518129 (CN)**
• **CARLUCCI, Fabio Maria**
**Shenzhen, Guangdong 518129 (CN)**
• **LI, Zhenguo**
**Shenzhen, Guangdong 518129 (CN)**

(74) Representative: **Maiwald GmbH**
**Engineering**
**Elisenhof**
**Elisenstrasse 3**
**80335 München (DE)**

(54) **NEURAL NETWORK ACQUISITION METHOD, DATA PROCESSING METHOD AND RELATED DEVICE**

(57) A neural network obtaining method, a data processing method, and a related device are disclosed. The method may be used in the field of automatic neural architecture search technologies in the field of artificial intelligence. The method includes: obtaining first indication information, where the first indication information indicates a probability and/or a quantity of times that k neural network modules appear in a first neural architecture cell; generating the first neural architecture cell based on the first indication information, and generating a first neural network; obtaining a target score corresponding to the first indication information, where the target score indicates performance of the first neural network; and obtaining second indication information from a plurality of pieces of first indication information based on a plurality of target scores, and obtaining a target neural network corresponding to the second indication information. The first indication information no longer indicates a topology relationship between different neural network modules. Therefore, search space corresponding to the neural architecture cell is reduced, required computer resources are reduced, and time costs are reduced.

FIG. 4

**Description**

This application claims priority to Chinese Patent Application No. 202111166585.0, filed with the China National Intellectual Property Administration on September 30, 2021 and entitled "NEURAL NETWORK OBTAINING METHOD, DATA PROCESSING METHOD, AND RELATED DEVICE", which is incorporated herein by reference in its entirety.

**TECHNICAL FIELD**

This application relates to the field of artificial intelligence, and in particular, to a neural network obtaining method, a data processing method, and a related device.

**BACKGROUND**

Artificial intelligence (Artificial Intelligence, AI) is a theory, a method, a technology, or an application system that simulates, extends, and expands human intelligence by using a digital computer or a digital computer-controlled machine, to perceive an environment, obtain knowledge, and obtain an optimal result based on the knowledge. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perception, inference, and decision-making functions.

However, a common neural network is still manually designed by human experts based on experience, and automatic neural architecture search (neural architecture search, NAS) is an important step towards automated machine learning (automated machine learning, AutoML). Specifically, the neural network includes at least one neural architecture cell. During NAS, the neural architecture cell is automatically generated, and then the neural network is generated. A training operation is performed by using the neural network, to obtain a performance score, of a first neural network, obtained when the first neural network processes target data. An objective of NAS is to automatically obtain a neural network with good performance.

However, when the neural architecture cell is automatically generated during NAS, an appropriate neural network module used to form the neural architecture cell needs to be selected, and a topology relationship between different neural network modules needs to be selected. Consequently, search space corresponding to the neural architecture cell is huge, an entire process of automatically obtaining a neural network with good performance needs to consume a large quantity of computer resources, and time costs are high.

**SUMMARY**

Embodiments of this application provide a neural network obtaining method, a data processing method, and a related device. Second indication information is obtained from at least one piece of first indication information, and a target neural network corresponding to the second indication information is further obtained. The first indication information only indicates a probability and/or a quantity of times that each of k neural network modules appears in a neural architecture cell, and no longer indicates a topology relationship between different neural network modules. Therefore, search space corresponding to the neural architecture cell is greatly reduced, computer resources required in an entire neural network obtaining process is reduced, and time costs are reduced.

To resolve the foregoing technical problem, embodiments of this application provide the following technical solutions.

According to a first aspect, an embodiment of this application provides a neural network obtaining method, and the method may be used in the field of NAS technologies in the field of artificial intelligence. The method may include: A network device obtains first indication information corresponding to a first neural architecture cell. The first neural architecture cell includes N neural network modules, the first indication information indicates a probability and/or a quantity of times that each of k to-be-selected neural network modules appears in the first neural architecture cell, and k is a positive integer. The network device generates the first neural architecture cell based on the first indication information, a first rule, and the k to-be-selected neural network modules, and generates a first neural network based on the generated first neural architecture cell and a second rule. The first neural network includes at least one first neural architecture cell, the first rule indicates N locations in the first neural architecture cell that lack neural network modules, and the second rule indicates C locations in the first neural network that lack first neural architecture cells. The network device obtains a target score corresponding to the first indication information, where the target score indicates performance, of the first neural network corresponding to the first indication information, in processing target data; and obtains one piece of second indication information from a plurality of pieces of first indication information based on a plurality of target scores corresponding to the plurality of pieces of first indication information, and determines a first neural network corresponding to the second indication information as a target neural network.

In this implementation, during research, a person skilled in the art finds that if a plurality of different neural architecture cells have a same neural network module, but different neural network modules correspond to different topology relationships, performance of the plurality of different neural architecture cells are close in processing the target data. Therefore, in this solution, the second indication information is obtained from at least one piece of first indication information, and the target neural network corresponding to the second indication information is further obtained. The first indication information only indicates a probability and/or a quantity of times that each of k neural network modules appears in a neural architecture cell, and no longer indicates a topology relationship between different neural network modules. Therefore, search space corresponding to the neural architecture cell is greatly reduced, computer resources required in an entire neural network obtaining process is reduced, and time costs are reduced.

In a possible implementation of the first aspect, the first indication information is included in k-dimensional Dirichlet distribution space, there are a plurality of vectors in the k-dimensional Dirichlet distribution space, each vector includes k elements, the k elements are all non-negative real numbers, and a sum of the k elements is 1. In other words, in this implementation, the first indication information indicates a probability that each of the k neural network modules appears in the neural architecture cell.

In this embodiment of this application, in the Dirichlet distribution space, the sum of the k elements in each vector is 1, and the Dirichlet distribution space is evenly distributed space. Therefore, the first indication information can be conveniently collected according to a Dirichlet distribution principle, to reduce difficulty of obtaining the first indication information in this solution.

In a possible implementation of the first aspect, after the network device obtains the target score corresponding to the first indication information, the method further includes: The network device obtains new first indication information based on at least one piece of old first indication information and a target score one-to-one corresponding to each piece of old first indication information, where the new first indication information indicates the probability that each of the k to-be-selected neural network modules appears in the first neural architecture cell, and the new first indication information is used to generate a new first neural network. Further, the network device may determine, from the at least one piece of old first indication information based on the at least one piece of old first indication information and the target score one-to-one corresponding to each piece of old first indication information, one piece of first indication information (which is referred to as "target indication information" in the following for ease of description) corresponding to a highest target score, and generate the new first indication information based on the target indication information.

In this embodiment of this application, a higher target score corresponding to the old first indication information indicates better performance, of the old first neural network, in processing the target data. The new first indication information is obtained based on the target score corresponding to each piece of old first indication information, and the new first indication information is used to generate the new first neural network. Therefore, this helps obtain a new first neural network with good performance. Because one piece of first indication information is sampled from the complete Dirichlet distribution space each time, over-fitting to local space in a sampling process of the first indication information is avoided. This ensures openness of the sampling process of the first indication information, and ensures that the new first neural network is optimized towards a neural network architecture with better performance.

In a possible implementation of the first aspect, the first indication information includes k first probability values corresponding to the k to-be-selected neural network modules, and one first probability value indicates a probability that one to-be-selected neural network module appears in the first neural architecture cell. That the network device generates the first neural architecture cell based on the first indication information and the k to-be-selected neural network modules includes: The network device multiplies each first probability value by N, to obtain a target result, where the target result includes k first values; performs rounding processing on each first value in the target result, to obtain a rounded target result, where the rounded target result includes k second values, the k second values are all integers, a sum of the k second values is N, and one second value indicates a quantity of times that one to-be-selected neural network module appears in the first neural architecture cell. Optionally, a distance between the rounded target result and the target result is smallest and valid, and the distance may be a Euclidean distance, a cosine distance, an L 1 distance, a Mahalanobis distance, another type of distance, or the like. The network device generates the first neural architecture cell based on the rounded target result and the k to-be-selected neural network modules. The N neural network modules included in the first neural architecture cell meet a constraint of the rounded target result, and N is a positive integer.

In this embodiment of this application, because the first indication information is obtained through sampling from the Dirichlet distribution space, it can be ensured that a sum of the k first probability values is 1, and it cannot be ensured that each first probability value multiplied by N is definitely an integer. Therefore, rounding processing may be performed on each first value in the target result, to obtain the rounded target result. The rounded target result includes the k second values, the k second values are all integers, and the sum of the k second values is N, and each second value indicates the quantity of times that one neural network module appears in the neural architecture cell. Then, the first neural architecture cell is constructed based on the rounded target result, to ensure smoothness of a construction process of the first neural architecture cell.

In a possible implementation of the first aspect, that the network device generates the first neural architecture cell based on the first indication information and the k to-be-selected neural network modules includes: The network device obtains, based on the first indication information, N first neural network modules by sampling the k to-be-selected neural network modules, where the first indication information indicates a probability that each to-be-selected neural network module is sampled; and generates the first neural architecture cell based on the N first neural network modules, where the first neural architecture cell includes the N first neural network modules.

In this embodiment of this application, the N first neural network modules are directly obtained, based on the first indication information, by sampling the k neural network modules, and then the first neural architecture cell is generated based on the N first neural network modules obtained through sampling. This provides another specific implementation of generating the first neural architecture cell based on the first indication information, and improves implementation flexibility of this solution. This solution is easy to implement.

In a possible implementation of the first aspect, the target data is any one of the following: an image, speech, text, or sequence data. A function of the target neural network is any one of the following: image classification, target detection on an object in an image, image migration, text translation, speech recognition, regression on sequence data, another function, or the like. In this embodiment of this application, a plurality of specific application scenarios of the target neural network are provided, to greatly extend implementation flexibility of this solution.

According to a second aspect, an embodiment of this application provides a neural network obtaining method, and the method may be used in the field of NAS technologies in the field of artificial intelligence. The method may include: A network device obtains first indication information corresponding to a second neural architecture cell. The second neural architecture cell includes N second neural network modules, each second neural network module is obtained by performing weighted summation on k to-be-processed neural network modules, the first indication information indicates a weight of each to-be-processed neural network module in the second neural network module, and N is an integer greater than or equal to 1. The network device generates the second neural architecture cell based on the first indication information and the k to-be-processed neural network modules, and generates a second neural network based on the generated second neural architecture cell, where the second neural network includes at least one second neural architecture cell; trains the second neural network, to update the first indication information, and obtains updated first indication information until a preset condition is met. The network device generates a first neural architecture cell based on the updated first indication information and the k to-be-processed neural network modules, and generates a target neural network based on the generated first neural architecture cell. The updated first indication information indicates a probability that each to-be-processed neural network module appears in the first neural architecture cell, and the target neural network includes at least one first neural architecture cell. Further, for a specific implementation in which the network device generates the first neural architecture cell based on the updated first indication information and the k to-be-processed neural network modules, and generates the target neural network based on the generated first neural architecture cell, refer to descriptions in the first aspect.

In this embodiment of this application, another implementation of automatically generating the target neural network is provided, to improve implementation flexibility of this solution.

In a possible implementation of the second aspect, the first indication information is included in k-dimensional Dirichlet distribution space, there are a plurality of vectors in the k-dimensional Dirichlet distribution space, each vector includes k elements, the k elements are all non-negative real numbers, and a sum of the k elements is 1.

In a possible implementation of the second aspect, that the network device trains the second neural network, to update the first indication information may include: The network device inputs target training data into the second neural network, generates, by using the second neural network, a prediction result corresponding to the target training data, and generates a function value of a target loss function based on an expected result corresponding to the target training data and the prediction result corresponding to the target training data. The target loss function indicates a similarity between the expected result corresponding to the target training data and the prediction result corresponding to the target training data. The network device generates a target score corresponding to the second neural network. The target score corresponding to the second neural network indicates performance, of the second neural network, in processing the target data. The network device keeps a second weight parameter in the second neural network unchanged, and reversely updates a value of a first weight parameter in the second neural network based on the target score. The network device keeps the first weight parameter in the second neural network unchanged, and reversely updates a value of the second weight parameter in the second neural network based on the value of the target loss function. The first weight parameter is a weight parameter corresponding to each to-be-processed neural network module in the second neural network, that is, the first weight parameter is a weight parameter corresponding to the first indication information. The second weight parameter is a weight parameter other than the first weight parameter in the second neural network.

According to a third aspect, an embodiment of this application provides a data processing method, and the method may be used in the field of NAS technologies in the field of artificial intelligence. The method may include: A network device inputs target data into a target neural network, and processes the target data by using the target neural network, to obtain a prediction result corresponding to the target data. The target neural network includes at least one first neural architecture cell, the first neural architecture cell is obtained based on first indication information and k to-be-processed neural network modules, the first indication information indicates a probability and/or a quantity of times that each of the k to-be-processed neural network modules appears in the first neural architecture cell, and k is a positive integer.

In a possible implementation of the third aspect, the first indication information is included in Dirichlet distribution space.

For the third aspect and meanings of terms in the third aspect in this embodiment of this application, refer to descriptions in the possible implementations of the first aspect. Details are not described herein again.

According to a fourth aspect, an embodiment of this application provides a neural network obtaining apparatus, and the apparatus may be used in the field of NAS technologies in the field of artificial intelligence. The neural network obtaining apparatus includes: an obtaining unit, configured to obtain first indication information corresponding to a first neural architecture cell, where the first indication information indicates a probability and/or a quantity of times that each of k to-be-selected neural network modules appears in the first neural architecture cell, and k is a positive integer; and a generation unit, configured to: generate the first neural architecture cell based on the first indication information and the k to-be-selected neural network modules, and generate a first neural network based on the generated first neural architecture cell, where the first neural network includes at least one first neural architecture cell. The obtaining unit is further configured to obtain a target score corresponding to the first indication information. The target score indicates performance, of the first neural network corresponding to the first indication information, in processing target data. The obtaining unit is further configured to: obtain second indication information from a plurality of pieces of first indication information based on a plurality of target scores corresponding to the plurality of pieces of first indication information, and obtain a target neural network corresponding to the second indication information.

The neural network obtaining apparatus in the fourth aspect in this embodiment of this application may further perform steps performed by the network device in the possible implementations of the first aspect. For specific implementation steps of the fourth aspect and the possible implementations of the fourth aspect in this embodiment of this application, and beneficial effect brought by each possible implementation, refer to descriptions in the possible implementations of the first aspect. Details are not described herein again.

According to a fifth aspect, an embodiment of this application provides a neural network obtaining apparatus, and the apparatus may be used in the field of NAS technologies in the field of artificial intelligence. The neural network obtaining apparatus includes: an obtaining unit, configured to obtain first indication information corresponding to a second neural architecture cell, where the second neural architecture cell includes N second neural network modules, each second neural network module is obtained by performing weighted summation on k to-be-processed neural network modules, the first indication information indicates a weight of each to-be-processed neural network module in the second neural network module, and N is an integer greater than or equal to 11; a generation unit, configured to: generate the second neural architecture cell based on the first indication information and the k to - be-processed neural network modules, and generate a second neural network based on the generated second neural architecture cell, where the second neural network includes at least one second neural architecture cell; and a training unit, configured to: train the second neural network, to update the first indication information, and obtain updated first indication information until a preset condition is met. The generation unit is configured to: generate a first neural architecture cell based on the updated first indication information and the k to-be-processed neural network modules, and generate a target neural network based on the generated first neural architecture cell. The updated first indication information indicates a probability that each to-be-processed neural network module appears in the first neural architecture cell, and the target neural network includes at least one first neural architecture cell.

The neural network obtaining apparatus in the fifth aspect in this embodiment of this application may further perform steps performed by the network device in the possible implementations of the second aspect. For specific implementation steps of the fifth aspect and the possible implementations of the fifth aspect in this embodiment of this application, and beneficial effect brought by each possible implementation, refer to descriptions in the possible implementations of the second aspect. Details are not described herein again.

According to a sixth aspect, an embodiment of this application provides a data processing apparatus, and the apparatus may be used in the field of NAS technologies in the field of artificial intelligence. The data processing apparatus includes: an input unit, configured to input target data into a target neural network; and a processing unit, configured to process the target data by using the target neural network, to obtain a prediction result corresponding to the target data. The target neural network includes at least one first neural architecture cell, the first neural architecture cell is obtained based on first indication information and k to-be-processed neural network modules, the first indication information indicates a probability and/or a quantity of times that each of the k to-be-processed neural network modules appears in the first neural architecture cell, and k is a positive integer.

The neural network obtaining apparatus in the sixth aspect in this embodiment of this application may further perform steps performed by the execution device in the possible implementations of the third aspect. For specific implementation steps of the sixth aspect and the possible implementations of the sixth aspect in this embodiment of this application, and beneficial effect brought by each possible implementation, refer to descriptions in the possible implementations of the third aspect. Details are not described herein again.

According to a seventh aspect, an embodiment of this application provides a computer program product. When the computer program is run on a computer, the computer is enabled to perform the neural network processing method in the first aspect or the second aspect, or perform the data processing method in the third aspect.

According to an eighth aspect, an embodiment of this application provides a computer-readable storage medium. The computer-readable storage medium stores a computer program, and when the program is run on a computer, the computer is enabled to perform the neural network processing method in the first aspect or the second aspect, or perform the data processing method in the third aspect.

According to a ninth aspect, an embodiment of this application provides a network device, including a processor. The processor is coupled to a memory. The memory stores program instructions, and when the program instructions stored in the memory are executed by the processor, the neural network obtaining method in the first aspect or the second aspect is implemented.

According to a tenth aspect, an embodiment of this application provides an execution device, including a processor. The processor is coupled to a memory. The memory stores program instructions, and when the program instructions stored in the memory are executed by the processor, the data processing method in the third aspect is implemented.

According to an eleventh aspect, an embodiment of this application provides a circuit system. The circuit system includes a processing circuit, and the processing circuit is configured to perform the neural network processing method in the first aspect or the second aspect, or perform the data processing method in the third aspect.

According to a twelfth aspect, an embodiment of this application provides a chip system. The chip system includes a processor, configured to implement functions in the foregoing aspects, for example, sending or processing data and/or information in the foregoing method. In a possible design, the chip system further includes a memory. The memory is configured to store program instructions and data that are necessary for a server or a communication device. The chip system may include a chip, or may include a chip and another discrete component.

**BRIEF DESCRIPTION OF DRAWINGS**

FIG. la is a schematic diagram of a structure of an artificial intelligence main framework according to an embodiment of this application;

FIG. 1b is a diagram of an application scenario of a neural network obtaining method according to an embodiment of this application;

FIG. 2a is a schematic diagram of an architecture of a neural network obtaining system according to an embodiment of this application;

FIG. 2b is a schematic diagram of another architecture of a neural network obtaining system according to an embodiment of this application;

FIG. 3a is a schematic diagram of a relationship between a neural network and a neural architecture cell in a neural network obtaining method according to an embodiment of this application;

FIG. 3b is a schematic diagram of a relationship between a neural architecture cell and a neural network module in a neural network obtaining method according to an embodiment of this application;

FIG. 3c is a schematic flowchart of a neural network obtaining method according to an embodiment of this application;

FIG. 4 is a schematic flowchart of a neural network obtaining method according to an embodiment of this application;

FIG. 5 is a schematic diagram of a relationship between a rounded target result and N first neural network modules in a neural network obtaining method according to an embodiment of this application;

FIG. 6 is a schematic diagram of a relationship between N first neural network modules and a first neural architecture cell in a neural network obtaining method according to an embodiment of this application;

FIG. 7A and FIG. 7B are a schematic diagram of a first neural network in a neural network obtaining method according to an embodiment of this application;

FIG. 8 is another schematic flowchart of a neural network obtaining method according to an embodiment of this application;

FIG. 9 is a schematic flowchart of a neural network obtaining method according to an embodiment of this application;

FIG. 10 is a schematic flowchart of a data processing method according to an embodiment of this application;

FIG. 11 is a schematic diagram of beneficial effect of a neural network obtaining method according to an embodiment of this application;

FIG. 12 is a schematic diagram of a structure of a neural network obtaining apparatus according to an embodiment of this application;

FIG. 13 is a schematic diagram of another structure of a neural network obtaining apparatus according to an embodiment of this application;

FIG. 14 is a schematic diagram of another structure of a neural network obtaining apparatus according to an embodiment of this application;

FIG. 15 is a schematic diagram of a structure of a data processing apparatus according to an embodiment of this application;

FIG. 16 is a schematic diagram of a structure of a network device according to an embodiment of this application;

FIG. 17 is a schematic diagram of a structure of an execution device according to an embodiment of this application; and

FIG. 18 is a schematic diagram of a structure of a chip according to an embodiment of this application.

## DESCRIPTION OF EMBODIMENTS

In the specification, claims, and the accompanying drawings of this application, terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, system, product, or device.

The following describes embodiments of this application with reference to the accompanying drawings. A person of ordinary skill in the art may learn that, with development of technologies and emergence of a new scenario, technical solutions provided in embodiments of this application are also applicable to a similar technical problem.

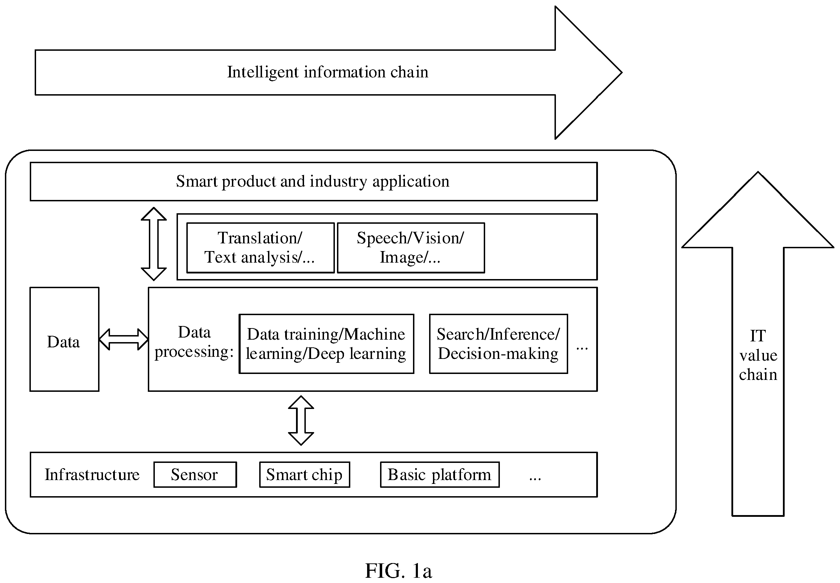

An overall working procedure of an artificial intelligence system is first described. FIG. 1a is a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" indicates a process from data obtaining to data processing. For example, the "intelligent information chain" may be a general process of intelligent information perception, intelligent information representation and formation, intelligent inference, intelligent decision-making, and intelligent execution and output. In this process, data undergoes a refining process of "data-information-knowledge-intelligence". The "IT value chain" is an industrial ecological process from underlying infrastructure of artificial intelligence to information (providing and processing technical implementations) to a system, and indicates value brought by artificial intelligence to the information technology industry.

(1) Infrastructure

The infrastructure provides computing capability support for the artificial intelligence system, implements communication with the external world, and implements support by using a basic platform. The infrastructure communicates with the outside by using a sensor. A computing capability is provided by a smart chip. The smart chip may specifically be a hardware acceleration chip such as a central processing unit (central processing unit, CPU), an embedded neural network processing unit (neural network processing unit, NPU), a graphics processing unit (graphics processing unit, GPU), an application-specific integrated circuit (application-specific integrated circuit, ASIC), or a field programmable gate array (field programmable gate array, FPGA). The basic platform includes related platforms, for example, a distributed computing framework and a network, for assurance and support, including cloud storage and computing, an interconnection network, and the like. For example, the sensor communicates with the outside to obtain data, and the data is provided to a smart chip in a distributed computing system provided by the basic platform for computing.

(2) Data

Data at an upper layer of the infrastructure indicates a data source in the field of artificial intelligence. The data relates to graphics, images, speech, and text, and further relates to Internet of things data of conventional devices, and includes service data of a conventional system and perception data such as force, displacement, a liquid level, temperature, and humidity.

(3) Data processing

Data processing usually includes data training, machine learning, deep learning, searching, inference, decision-making, and another method.

Machine learning and deep learning may mean performing symbolic and formalized intelligent information modeling, extraction, preprocessing, training, and the like on data.

Inference is a process of performing machine thinking and solving problems by simulating an intelligent inference manner of humans in a computer or an intelligent system based on formal information and according to an inference control policy. Typical functions are searching and matching.

The decision-making is a process of performing decision-making after intelligent information is inferred, and usually provides classification, sorting, prediction, and other functions.

(4) General capabilities

After data undergoes the foregoing data processing, some general capabilities may be further formed based on a data processing result. For example, the general capabilities may be an algorithm or a general system, for example, translation, text analysis, computer vision processing, speech recognition, and image recognition.

(5) Smart products and industry applications

Smart products and industry applications are products and applications of the artificial intelligence system in various fields, and are encapsulation for an overall solution of artificial intelligence, to productize intelligent information decision-making and implement applications. Application fields thereof mainly include an intelligent terminal, intelligent manufacturing, intelligent transportation, intelligent home, intelligent healthcare, intelligent security protection, autonomous driving, a smart city, and the like.

This application may be applied to various application scenarios in which an artificial intelligence model is used for data processing. The model may be implemented by using a model of a neural network or non-neural network model. In this embodiment of this application, only an example in which the model is specifically a neural network is used for description. The neural network may specifically be a convolutional neural network (convolutional neural network, CNN), a recurrent neural network, a long short-term memory (long short-term memory, LSTM) network, a transformer (Transformer) network, another type of network, or the like. The neural network may automatically determine a neural network architecture by using a NAS technology.

The neural architecture search (neural architecture search, NAS) technology is a technology used to automatically design an artificial neural network (artificial neural network, ANN). The NAS technology aims to automatically design, based on a function of a target neural network that needs to be constructed, a neural architecture in a scenario in which manual intervention and computing resource consumption are minimized. A process of automatically generating the target neural network by using the NAS technology mainly includes three parts: search space, a search policy, and performance evaluation. Optionally, a process of automatically designing the target neural network by using the NAS technology may further include performance prediction.

The search space defines a plurality of possible neural network architectures corresponding to the target neural network. The search policy defines a policy for searching the search space for an optimal neural network architecture corresponding to the target neural network. The performance prediction is used to predict performance of a neural network corresponding to a neural network architecture that is not completely trained, to assist in selecting, from a plurality of neural network architectures that need to be evaluated, a neural network architecture that needs to be completely evaluated. The performance evaluation is training a determined neural network architecture, and obtaining performance of the trained neural network architecture.

The target neural network (namely, a neural network that needs to be automatically generated) is used to process target data. The target data is any one of the following: an image, speech, text, or sequence data. A function of the target neural network is any one of the following: image classification, target detection on an object in an image, image migration, text translation, speech recognition, regression on sequence data, another function, or the like. Examples are not enumerated herein. In this embodiment of this application, a plurality of specific application scenarios of the target neural network are provided, to greatly extend implementation flexibility of this solution.

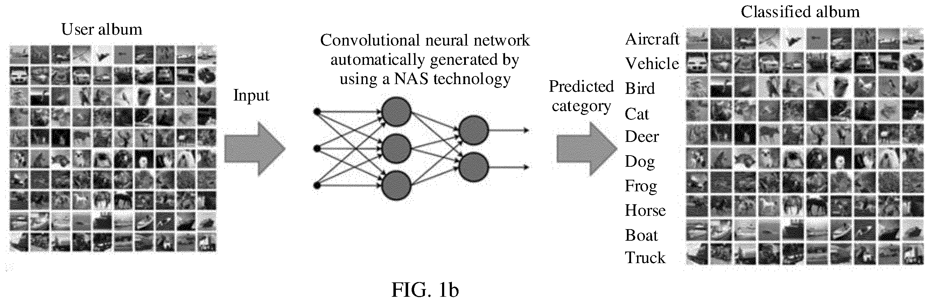

For example, in the field of intelligent terminals, a user often stores a large quantity of pictures in a smartphone or another intelligent electronic device, and the pictures are classified by using the target neural network, to help the user manage and search for the picture. For more intuitive understanding of this solution, refer to FIG. 1b. FIG. 1b is a diagram of an application scenario of a neural network obtaining method according to an embodiment of this application. As shown in the figure, a task of a convolutional neural network (namely, an example of the target neural network) configured on a smartphone is to classify images in an album of a user, to obtain a classified album shown in FIG. 1b. The convolutional neural network may be automatically generated by using the NAS technology. It should be understood that FIG. 1b is merely an example of the application scenario of this solution for ease of understanding, and is not intended to limit this solution.

In another example, in the fields of an intelligent terminal, autonomous driving, intelligent security protection, a smart city, or the like, after obtaining a to-be-processed image, an electronic device needs to perform target detection on an object in the image by using a convolutional neural network (namely, an example of the target neural network) configured on the electronic device, to obtain a detection result. The used convolutional neural network may be automatically generated by using the NAS technology. Application scenarios in embodiments of this application are not enumerated herein.

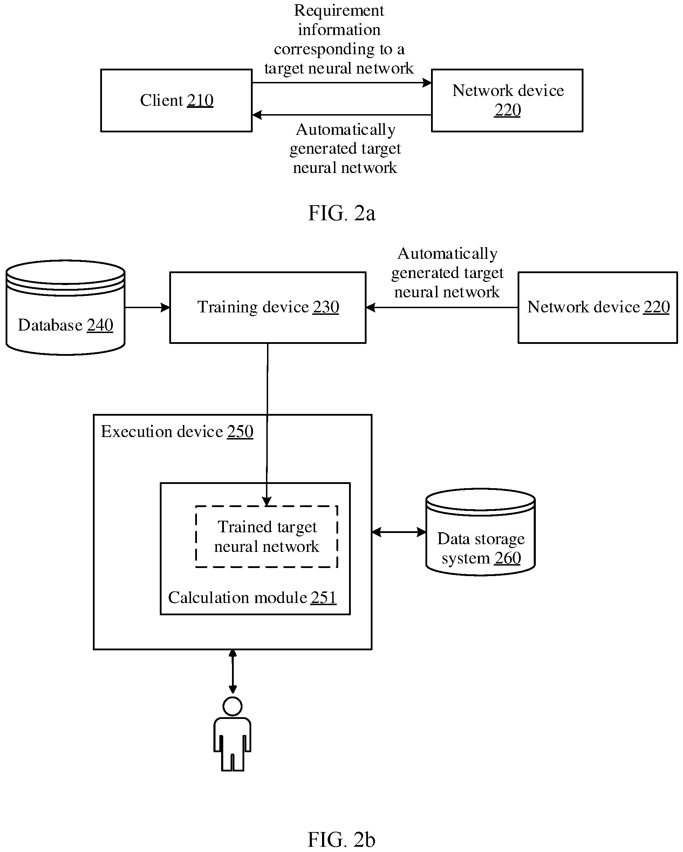

Before the neural network processing method provided in embodiments of this application is described in detail, two neural network obtaining systems provided in embodiments of this application are first described with reference to FIG. 2a and FIG. 2b. FIG. 2a is a schematic diagram of an architecture of a neural network obtaining system according to an embodiment of this application. A neural network obtaining system 200 includes a client 210 and a network device 220.

A user may input, by using the client 210, target requirement information corresponding to a to-be-constructed neural network. The target requirement information may include a function of the to-be-constructed neural network. For example, the function of the to-be-constructed neural network may be image classification, image migration, text translation, speech recognition, or another type of function. Examples are not enumerated herein.

The client 210 sends the target requirement information to the network device 220. The network device 220 determines a type of the to-be-constructed neural network based on the target requirement information, automatically generates a target neural network, and sends the target neural network to the client 210.

FIG. 2b is a schematic diagram of another architecture of a neural network obtaining system according to an embodiment of this application. A neural network obtaining system 200 includes a network device 220, a training device 230, a database 240, an execution device 250, and a data storage system 260. The execution device 250 includes a calculation module 251. The network device 220 and the training device 230 may specifically be integrated into a same device, or may be two different devices.

After determining a type of a to-be-constructed neural network, the network device 220 automatically generates a target neural network, and sends the target neural network to the training device 230. The database 240 stores a training data set. After obtaining the target neural network, the network device 220 performs iterative training on the target neural network based on training data in the database 240, to obtain a mature target neural network.

After obtaining the mature target neural network, the training device 230 deploys the mature target neural network to the execution device 250, and the calculation module 251 in the execution device 250 may perform data processing by using the target neural network. The execution device 250 may specifically be represented in different systems or devices, for example, a mobile phone, a tablet computer, a notebook computer, a VR device, a monitoring system, or a data processing system of a radar. A specific form of the execution device 250 may be flexibly determined based on an actual application scenario. This is not limited herein.

The execution device 250 may invoke data, code, and the like in the data storage system 260, and may further store, in the data storage system 260, data, an instruction, and the like. The data storage system 260 may be disposed in the execution device 250, or the data storage system 260 may be an external memory relative to the execution device 250.

In some embodiments of this application, refer to FIG. 2b. A "user" may directly interact with the execution device 250, that is, the execution device 250 may directly present, to the "user", a processing result output by the target neural network. It should be noted that FIG. 2a and FIG. 2b are merely two schematic diagrams of architectures of neural network obtaining systems provided in embodiments of the present invention. Location relationships between devices, components, modules, and the like shown in the figure do not constitute any limitation. For example, in some other embodiments of this application, the execution device 250 and a client device in FIG. 2b may alternatively be independent devices. An input/output (input/output, I/O) interface is configured in the execution device 250, and the execution device 250 exchanges data with the client device through the I/O interface.

One target neural network includes at least one neural architecture cell (neural architecture cell). One neural architecture cell may include N neural network modules. The network device 220 is configured with k to-be-selected neural network modules. The k to-be-selected neural network modules are used by the network device 220 to automatically construct one neural architecture cell. Both N and k are positive integers. Specifically, a quantity of neural network modules included in one neural architecture cell and a quantity of to-be-selected neural network modules are flexibly determined based on an actual application scenario. This is not limited herein.

For example, if the target neural network is a convolutional neural network (convolutional neural network, CNN), one neural architecture cell may be one convolution unit. One convolution unit may include only a convolutional layer, one convolution unit may include a convolutional layer and a pooling layer, or one convolution unit may include more types or fewer types of neural network layers. This is not limited herein.

Further, one convolutional layer may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix usually processes pixels at a granularity level of one pixel (or two pixels, depending on a value of a stride stride) in a horizontal direction on an input image, to extract a specific feature from the image.

In another example, for example, if the target neural network is a recurrent neural network (recurrent neural network, RNN), one neural architecture cell may be a recurrent cell (recurrent cell). It should be noted that the target neural network may alternatively be a transformer neural network (transformer network), another type of neural network, or the like. The example herein is merely used to facilitate understanding of a relationship between a neural network, a neural architecture cell, and a neural network module, and is not intended to limit this solution.

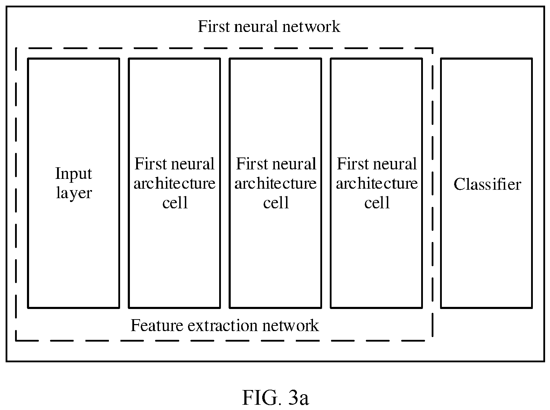

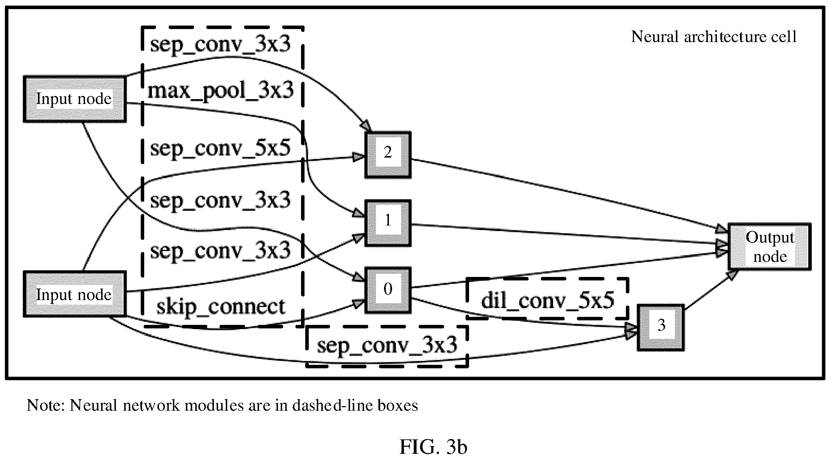

For more intuitive understanding of this solution, refer to FIG. 3a and FIG. 3b. FIG. 3a is a schematic diagram of a relationship between a neural network and a neural architecture cell in a neural network obtaining method according to an embodiment of this application. FIG. 3b is a schematic diagram of a relationship between a neural architecture cell and a neural network module in a neural network obtaining method according to an embodiment of this application. First, refer to FIG. 3a. An example in which a function of a first neural network is to classify an input image is used in FIG. 3a. As shown in the figure, the first neural network may include three first neural architecture cells. In addition to the first neural architecture cells, the first neural network may further include another neural network layer, for example, an input layer and a classifier in the figure. It should be understood that the example in FIG. 3a is merely for ease of understanding this solution, and is not intended to limit this solution.

Then, refer to FIG. 3b. An example in which a value of N is 8 is used in FIG. 3b. Eight neural network modules included in one neural architecture cell are respectively four sep_conv_3×3, one sep_pool_3×3, one sep_conv_5×5, one skip_connect, and one dil_conv_5×5 in FIG. 3a. Operations performed by sep_conv_3×3, sep_conv_5×5, and dil_conv_5×5 are all convolution, an operation performed by sep_pool_3×3 is pooling, and an operation performed by skip_connect is splicing. In FIG. 3b, 0, 1, 2, and 3 indicate other nodes located between an input node and an output node. In other words, in addition to a neural network module, one neural architecture cell may further include an input node, an output node, and another node located between the input node and the output node. It should be understood that the example in FIG. 3b is merely for ease of understanding this solution, and is not intended to limit this solution.

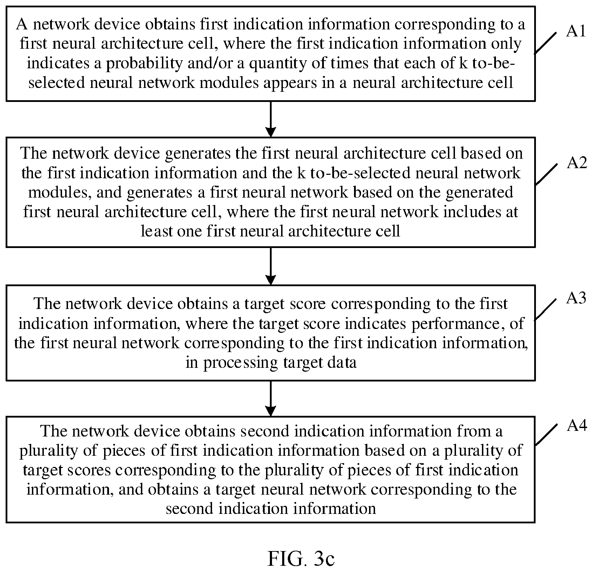

An embodiment of this application provides a neural network obtaining method, to reduce computer resources consumed in an entire process of "automatically generating a target neural network", and reduce time required in the entire process of "automatically generating a target neural network". FIG. 3c is a schematic flowchart of a neural network obtaining method according to an embodiment of this application. A1: A first network device obtains first indication information corresponding to a first neural architecture cell, where the first indication information only indicates a probability and/or a quantity of times that each of k to-be-selected neural network modules appears in a neural architecture cell. Because a person skilled in the art finds in research that if different neural architecture cells have a same neural network module, but different neural network modules correspond to different topology relationships, performance of the plurality of different neural architecture cells are close in processing target data. Therefore, in this embodiment of this application, the first indication information no longer indicates a topology relationship between different neural network modules.

A2: The first network device generates the first neural architecture cell based on the first indication information and the k to-be-selected neural network modules, and generates a first neural network based on the generated first neural architecture cell, where the first neural network is a neural network for processing the target data, and the first neural network includes at least one first neural architecture cell.

A3: The first network device obtains a target score corresponding to the first indication information, where the target score indicates performance, of the first neural network corresponding to the first indication information, in processing the target data.

A4: The first network device obtains second indication information from at least one piece of first indication information based on at least one target score, and obtains a target neural network corresponding to the second indication information, where a probability that the first indication information corresponding to the first neural network is selected is related to a target score corresponding to the first indication information.

In this embodiment of this application, it can be learned from the foregoing descriptions that the second indication information is obtained from the at least one piece of first indication information, and the target neural network corresponding to the second indication information is further obtained. The first indication information only indicates the probability and/or the quantity of times that each of the k neural network modules appears in the neural architecture cell, and no longer indicates the topology relationship between different neural network modules. Therefore, search space corresponding to the neural architecture cell is greatly reduced, computer resources required in an entire neural network obtaining process is reduced, and time costs are reduced.

In this embodiment of this application, not only a process of automatically generating the target neural network is provided, but also an inference process of the target neural network is provided. The following describes specific implementation procedures of the two phases.

1. Phase of automatically generating the target neural network

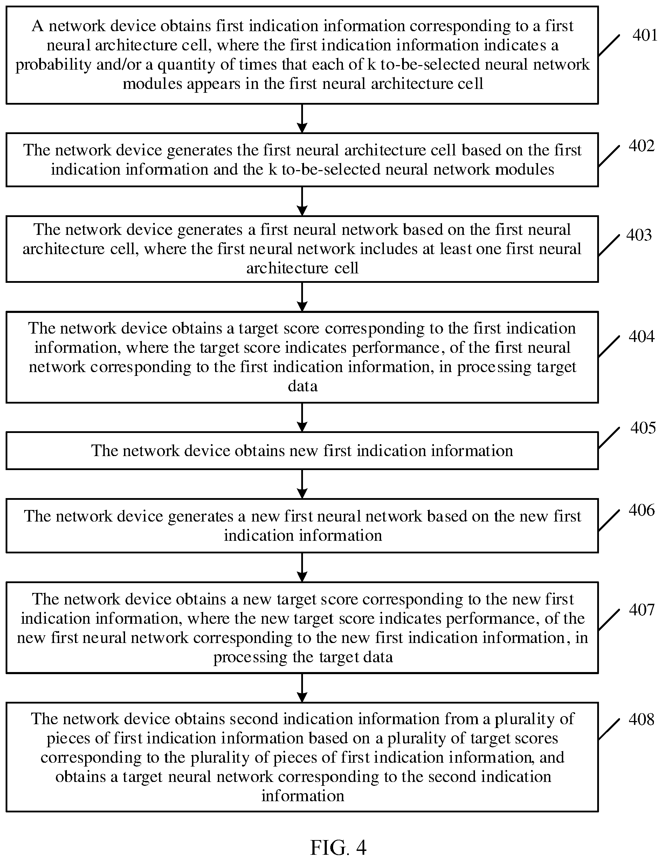

In this embodiment of this application, specifically, FIG. 4 is a schematic flowchart of a neural network obtaining method according to an embodiment of this application. The neural network obtaining method according to an embodiment of this application may include the following steps.

401: A network device obtaining first indication information corresponding to a first neural architecture cell, where the first indication information indicates a probability and/or a quantity of times that each of k neural network modules appears in the neural architecture cell.

In this embodiment of this application, before constructing the first neural architecture cell, the network device may obtain, according to a preset search policy, the first indication information corresponding to the first neural architecture cell. The network device is configured with the k to-be-selected neural network modules, and one neural architecture cell includes N neural network modules. In other words, the network device needs to determine the N neural network modules based on the k to-be-selected neural network modules, to generate one neural architecture cell. It should be noted that values of k and N may be pre-configured in the network device, or may be sent by another device to the network device. Optionally, the network device may further pre-store a maximum quantity of connections between neural network modules in the first neural architecture cell, a quantity of first neural architecture cells in a final target neural network, another parameter, or the like. Specific types of information pre-stored in the network device may be flexibly determined based on an actual application scenario.

The first indication information indicates the probability and/or the quantity of times that each of the k to-be-selected neural network modules appears in the neural architecture cell. If the first indication information indicates the probability that each of the k to-be-selected neural network modules appears in the neural architecture cell, the first indication information may include vectors of k elements one-to-one corresponding to the k to-be-selected neural network modules, and a sum of the k elements is 1. For example, the first indication information may be represented as a vector located in k-dimensional simplex space (simplex space). A specific example is as follows:

$$\{\tilde{p} \in \mathbb{R}^k, \sum_{i=1}^{k} \tilde{p}_i = 1, \tilde{p}_i \geq 0; \; \forall i = \{1, \dots, k\}\} \quad (1)$$

$\tilde{p}$ indicates the first indication information, $\tilde{p}_i$ indicates an ith element in one piece of first indication information, $\tilde{p}_i = \frac{\mathrm{n(o_i)}}{N}$ indicates a probability that an ith neural network module in the k to-be-selected neural network modules appears in the first neural architecture cell, and $\mathrm{n(o_i)}$ indicates a quantity of times that the ith neural network module in the k to-be-selected neural network modules appears in the first neural architecture cell. It should be understood that an example in the formula (1) is merely for ease of understanding this solution, and is not intended to limit this solution.

Specifically, in an implementation, the first indication information in step 401 is obtained according to a Dirichlet distribution (Dirichlet distribution) principle. In other words, the first indication information is included in k-dimensional first Dirichlet distribution space. "Obtaining the first indication information according to the Dirichlet distribution principle" means that the preset search policy includes random sampling in the Dirichlet distribution space. There are a plurality of vectors in the k-dimensional Dirichlet distribution space, each vector includes k elements, the k elements are all non-negative real numbers, and a sum of the k elements is 1. In other words, in this implementation, the first indication information indicates the probability that each of the k neural network modules appears in the neural architecture cell.

Further, because the network device obtains the first indication information for the first time in step 401, the network device may first determine first Dirichlet distribution space based on a first distribution parameter, and then perform random sampling in the first Dirichlet distribution space, to obtain the first indication information. The first distribution parameter is an initial distribution parameter, and includes k parameters one-to-one corresponding to the k elements. The first distribution parameter corresponds to a probability density function of the k-dimensional Dirichlet distribution space. For more intuitive understanding of this solution, the following discloses a formula of a distribution parameter corresponding to the Dirichlet distribution space:

$$\tilde{p} \sim Dir(\alpha_1, \dots, \alpha_k) \quad (2)$$

$Dir(\alpha_1, \dots, \alpha_k)$ indicates a probability density function of the first Dirichlet distribution space corresponding to the first indication information, $\alpha_1, \dots, \alpha_k$ indicates a distribution parameter (namely, the first distribution parameter) corresponding to each of the k elements included in the first indication information, and $\alpha_1, \dots, \alpha_k$ are all positive real numbers. For example, if values of $\alpha_1, \dots, \alpha_k$ may be all 1, the first Dirichlet distribution space is completely evenly distributed space. It should be understood that the example in the formula (2) is merely for ease of understanding this solution, is not intended to limit this solution.

In this embodiment of this application, in the Dirichlet distribution space, the sum of the k elements in each vector is 1, and the Dirichlet distribution space is evenly distributed space. Therefore, the first indication information can be conveniently collected according to the Dirichlet distribution principle, to reduce difficulty of obtaining the first indication information in this solution.

Optionally, the preset search policy may include random sampling in the Dirichlet distribution space and a Bayesian optimization (Bayesian optimization, BO) algorithm. The network device may obtain, according to the Dirichlet distribution principle and the Bayesian optimization algorithm, a plurality of pieces of first indication information corresponding to the first neural architecture cell. Specifically, the network device may sample T pieces of first indication information in the first Dirichlet distribution space, where T is an integer greater than or equal to 1.

In another implementation, the preset search policy includes an evolutionary algorithm. The first indication information in this implementation indicates the probability and/or the quantity of times that each of the k to-be-selected neural network modules appears in the neural architecture cell. Specifically, step 401 may include: The network device obtains S pieces of first indication information. After determining the values of N and k, the network device may determine specific forms of the S pieces of first indication information and a value of S as $\binom{N+k-1}{k-1}$. Therefore, the network device may select at least one piece of first indication information from the S pieces of first indication information according to the evolutionary algorithm, where S is an integer greater than or equal to 1.

Optionally, the preset search policy includes the evolutionary algorithm and the Bayesian optimization algorithm. The network device may further select, according to the evolutionary algorithm and the Bayesian optimization algorithm, T pieces of first indication information from the S pieces of first indication information.

In another implementation, the preset search policy includes random selection. The first indication information in this implementation indicates the probability and/or the quantity of times that each of the k to-be-selected neural network modules appears in the neural architecture cell. Specifically, step 401 may include: The network device obtains the S pieces of first indication information, and randomly selects at least one piece of first indication information from the S pieces of first indication information. For meanings of the S pieces of first indication information, refer to the foregoing descriptions.

Optionally, the preset search policy includes the random selection and the Bayesian optimization algorithm. The network device may further randomly select, according to the Bayesian optimization algorithm, T pieces of first indication information from the S pieces of first indication information.

It should be noted that the preset search policy may alternatively use another type of search policy. Examples are not enumerated herein.

402: The network device generates the first neural architecture cell based on the first indication information and the k neural network modules.

In this embodiment of this application, after obtaining the one or T pieces of first indication information in step 401, the network device determines N first neural network modules based on each piece of first indication information and the k to-be-selected neural network modules. The N first neural network modules are all included in the k to-be-selected neural network modules.

The network device generates one or more first neural architecture cells based on the determined N first neural network modules, where the first neural architecture cell includes the N first neural network modules.

The following describes a process in which the network device determines the N first neural network modules based on the one piece of first indication information and the k neural network modules. Specifically, in an implementation, if the first indication information is obtained based on Dirichlet distribution, the obtained first indication information is any point in the k-dimensional simplex space, valid first indication information that can be used to generate the first neural architecture cell needs to be a point on a regular grid (regular grid) in the k-dimensional simplex space, and the valid first indication information can be multiplied by N, to obtain k integers. However, the first indication information obtained in step 401 is not necessarily all valid first indication information. Therefore, the first indication information obtained in step 401 needs to be processed.

More specifically, the network device may multiply each first probability value by N, to obtain a target result, where the target result includes k first values, and each first value indicates a probability that a neural network module appears in the neural architecture cell; and performs rounding processing on each first value in the target result, to obtain a rounded target result, where the rounded target result includes k second values, each second value indicates a quantity of times that a neural network module appears in the neural architecture cell, the k second values are all integers, and a sum of the k second values is N. The network device determines the N first neural network modules based on the rounded target result and the k neural network modules. The determined N first neural network modules meet a constraint of the rounded target result. For further understanding of this solution, the rounding operation is shown according to the following formula:

$$s(p) = [p_i - \lfloor p_i \rfloor] \; \forall i = \{1, \dots, k\} \; (3)$$

p indicates the target result, that is, p = $N\tilde{p}$, $p_i$ indicates an $i^{th}$ value in the target result, $\lfloor p_i \rfloor$ indicates an integer part of the $i^{th}$ value in the target result, s(p) indicates a decimal part of p, that is, indicating a decimal part of k values in the target result, and it may be found that $g(p) := \sum_{i=1}^{k} s(p)_i = N - \sum_{i=1}^{k} \lfloor p_i \rfloor$ is a non-negative integer.

The network device rounds maximum g(p) values in s(p) to 1, and rounds remaining values in s(p) to 0, to obtain a k-dimensional vector m including 1 and 0. (p - s(p) + m) is the rounded target result, that is, $\frac{1}{N}(p - s(p) + m)$ is valid indication information with a closest distance to $N\tilde{p}$ that is obtained in step 401. The distance may be a Euclidean distance, a cosine distance, an L1 distance, a Mahalanobis distance, another type of distance, or the like. It should be understood that the example shown in the formula (3) is only an example of the rounding processing.

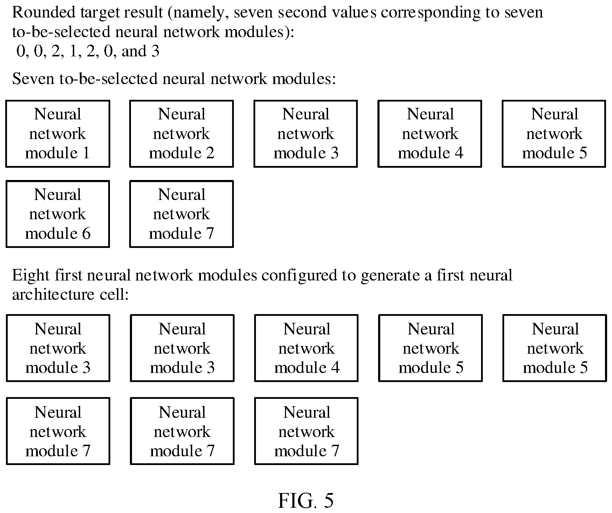

For more intuitive understanding of a relationship between the rounded target result, the k neural network modules, and the N first neural network modules, refer to FIG. 5. FIG. 5 is a schematic diagram of a relationship between the rounded target result and the N first neural network modules in a neural network obtaining method according to an embodiment of this application. In FIG. 5, an example in which a value of N is 8 and a value of k is 7 is used. As shown in FIG. 5, the rounded target result includes seven second values one-to-one corresponding to a neural network module 1 to a neural network module 7, and the seven second values are 0, 0, 2, 1, 2, 0, and 3. In this case, eight first neural network modules include two neural network modules 3, one neural network module 4, two neural network modules 5, and three neural network modules 7. It should be understood that the example in FIG. 5 is merely for ease of understanding this solution, and is not intended to limit this solution.

In this embodiment of this application, because the first indication information is obtained through sampling from the Dirichlet distribution space, it can be ensured that a sum of the k first probability values is 1, and it cannot be ensured that each first probability value multiplied by N is definitely an integer. Therefore, rounding processing may be performed on each first value in the target result, to obtain the rounded target result. The rounded target result includes the k second values, the k second values are all integers, and the sum of the k second values is N, and each second value indicates the quantity of times that one neural network module appears in the neural architecture cell. Then, the first neural architecture cell is constructed based on the rounded target result, to ensure smoothness of a construction process of the first neural architecture cell.

In another implementation, if the first indication information is selected from the S pieces of first indication information according to the evolutionary algorithm, the random selection, or another search policy, or if the first indication information is obtained based on the Dirichlet distribution, the network device may obtain, based on the obtained first indication information, the N first neural network modules by sampling the k neural network modules, where the first indication information indicates a probability that each of the k neural network modules is sampled.

For further understanding of this solution, the sampling process is shown according to the following formula:

$$o_j \sim \text{Categorical}(\tilde{p}_1, \dots, \tilde{p}_k); \; \forall j = \{1, \dots, N\} \; (4)$$

Categorical indicates polynomial distribution. For a sampling process of each of the N first neural network modules, the network device performs the sampling operation by using $(\tilde{p}_1, \dots, \tilde{p}_k)$ as the probability that each of the k neural network modules is sampled. The network device repeatedly performs the foregoing operations for N times, to obtain N target neural networks through sampling. It should be understood that the example in the formula (4) is merely an example for ease of understanding this solution.

In this embodiment of this application, the N first neural network modules are directly obtained, based on the first indication information, by sampling the k neural network modules, and then the first neural architecture cell is generated based on the N first neural network modules obtained through sampling. This provides another specific implementation of generating the first neural architecture cell based on the first indication information, and improves implementation flexibility of this solution. This solution is easy to implement.

In another implementation, if the first indication information is selected from the S pieces of first indication information according to the evolutionary algorithm, the random selection, or another search policy, because each of the S pieces of first indication information is valid indication information, the network device may directly multiply each value included in the first indication information obtained in step 401 by N, to obtain a first result. The first result includes k third values one-to-one corresponding to the k to-be-selected neural network modules, and each third value indicates a quantity of times that one of the k to-be-selected neural network modules appears in the first architecture cell. The network device determines the N first neural network modules based on the first result and the k to-be-selected neural network modules.

It should be noted that if the network device obtains the T pieces of first indication information in step 401, in step 402, the network device may perform the foregoing operation based on each of the T pieces of first indication information, to obtain T groups of neural network modules. Each group of neural network modules includes N neural network modules.

The following describes a process in which the network device generates the first neural architecture cell based on the N first neural network modules. Specifically, the network device may store a first rule. The network device generates H first neural architecture cells based on the N first neural network modules and the first rule, where H is an integer greater than or equal to 1.

The first rule indicates N locations in the first neural architecture cell that lack neural network modules. In addition to the N first neural network modules, the first neural architecture cell may further include an input node and an output node. Optionally, the first neural architecture cell may further include at least one target node. The target node is a node located between the input node and the output node, and the first rule further indicates a location of each target node in the first neural architecture cell.

It should be noted that a specific quantity of generated first neural architecture cells (namely, a value of H) may be determined based on a quantity of neural architecture cells required in an entire first neural network. The first indication information limits only neural network modules (that is, only the N first neural network modules are determined) that are used in the first neural architecture cell, and does not limit a topology relationship between the N first neural network modules, that is, does not limit a sequence and a connection manner of the N first neural network modules. Therefore, different first neural architecture cells in the H first neural architecture cells may correspond to different topology relationships, or different first neural architecture cells in the H first neural architecture cells may correspond to a same topology relationship.

Optionally, if the first neural network includes at least two first neural architecture cells, different first neural architecture cells each include the N first neural network modules, but topology relationships corresponding to the N first neural network modules in the different first neural architecture cells may be the same or may be different.

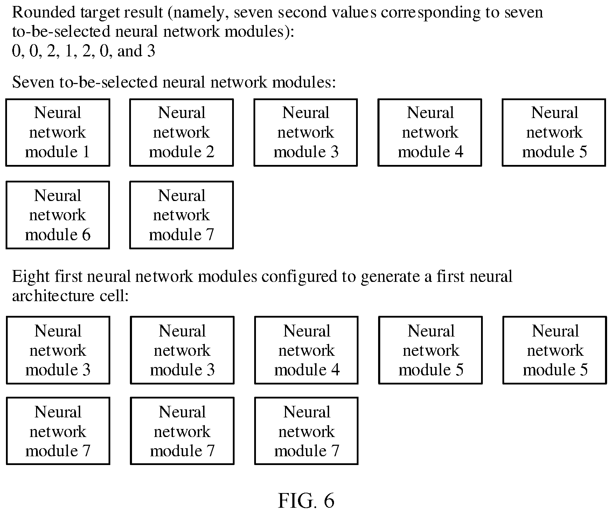

For more intuitive understanding of this solution, refer to FIG. 6. FIG. 6 may be understood with reference to FIG. 3. FIG. 6 is a schematic diagram of a relationship between the N first neural network modules and the first neural architecture cell in the neural network obtaining method according to an embodiment of this application. In FIG. 6, an example in which a value of k is 6 and a value of N is 8 is used. Eight first neural network modules include four neural network modules 1, two neural network modules 2, zero neural network module 3, two neural network modules 4, zero neural network module 5, and zero neural network module 6. FIG. 6 shows two different first neural architecture cells and a topology relationship corresponding to each neural architecture cell: a neural architecture cell A, a topology relationship corresponding to the neural architecture cell A, a neural architecture cell B, and a topology relationship corresponding to the neural architecture cell B. As shown in the figure, although the neural architecture cell A and the neural architecture cell B include eight same first neural network modules, the neural architecture cell A and the neural architecture cell B are specifically represented as different neural architecture cells. Because the first indication information does not limit a topology relationship between different first neural network modules, same first indication information can correspond to a plurality of different neural architecture cells. It should be understood that the example in FIG. 6 is merely for ease of understanding this solution, and is not intended to limit this solution.

Optionally, if the T pieces of first indication information are obtained in step 401, in step 402, the network device may obtain one neural architecture cell set for any one of the T pieces of first indication information. One neural architecture cell set includes one or more first neural architecture cells. The network device performs the foregoing operation on each of the T pieces of first indication information, to obtain T neural architecture cell sets.

403: The network device generates the first neural network based on the first neural architecture cell, where the first neural network includes at least one first neural architecture cell.

In this embodiment of this application, the network device may pre-store a second rule. After the H first neural architecture cells are generated in step 402, the first neural network may be generated according to the second rule and the H first neural architecture cells. The first neural network is used to process target data, and the first neural network includes the H first neural architecture cells.

The second rule indicates C locations in the first neural network that lack first neural architecture cells. The first neural network may further include a plurality of target neural network layers. The target neural network layer is a neural network layer other than the first neural architecture cell. Specifically, target neural network layers that are included in the first neural network need to be determined based on a specific function of the first neural network. For example, the first neural network is used for image classification, one first neural architecture cell is one convolution unit, and the first neural network may include a feature extraction network and a classification network. The first neural architecture cell is included in the feature extraction network, and the classification network may include a plurality of target neural network layers and the like. It should be understood that the example herein is merely for ease of understanding a relationship between the first neural architecture cell and the first neural network, and is not intended to limit this solution.

Further, if the first neural network includes a plurality of first neural architecture cells, the first neural network may use a plurality of different first neural architecture cells, or may use a plurality of same first neural architecture cells.

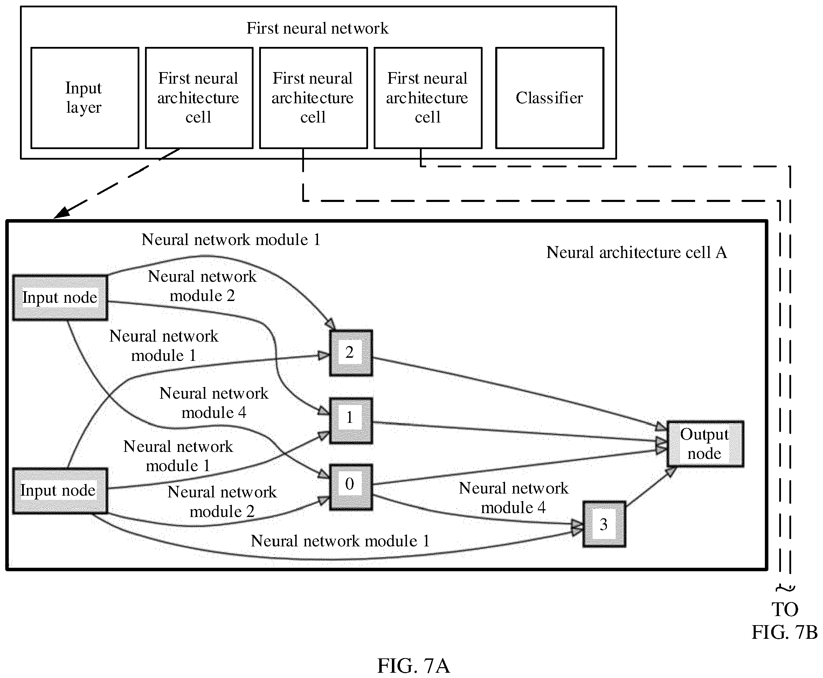

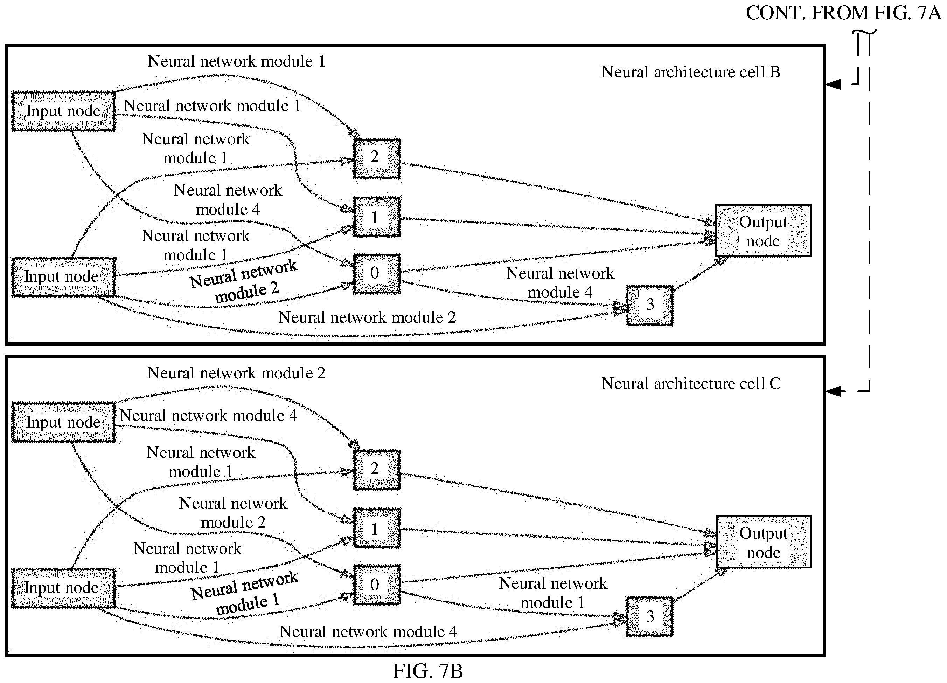

For more intuitive understanding of this solution, refer to FIG. 7A and FIG. 7B. FIG. 7A and FIG. 7B may be understood with reference to FIG. 6. FIG. 7A and FIG. 7B are a schematic diagram of the first neural network in the neural network obtaining method according to an embodiment of this application. In FIG. 7A and FIG. 7B, an example in which the first neural network is specifically represented as a convolutional neural network and a function of the first neural network is image classification is used. The first neural network includes three different first neural architecture cells. As shown in the figure, the three first neural architecture cells use same first neural network modules, but the first neural network modules in the three first neural architecture cells correspond to different topology relationships. It should be understood that the example in FIG. 7A and FIG. 7B is merely for ease of understanding this solution, and is not intended to limit this solution.

Optionally, if the T neural architecture cell sets are obtained in step 402, in step 403, the network device may generate one first neural network for any one of the T neural architecture cell sets, and the network device can generate T first neural networks based on the T neural architecture cell sets.

404: The network device obtains a target score corresponding to the first indication information, where the target score indicates performance, of the first neural network corresponding to the first indication information, in processing the target data.

In this embodiment of this application, after obtaining the first neural network, the network device needs to obtain the target score corresponding to the first indication information. The target score indicates the performance, of the first neural network corresponding to the first indication information, in processing the target data. The target score may include at least one score value one-to-one corresponding to at least one score indicator, or the target score may be obtained by performing weighted summation on the at least one score value.

Further, the at least one score indicator includes any one or a combination of a plurality of the following indicators: accuracy, of the first neural network, in processing the target data, floating-point operations per second (floating-point operations per second, FLOPs), of the first neural network, in processing the target data, a size of storage space occupied by the first neural network, another indicator that can reflect the performance of the first neural network, or the like.

Optionally, if the network device generates the T first neural networks in step 403, in step 404, the network device may separately predict performance of the T first neural networks, to obtain T first scores one-to-one corresponding to the T first neural networks. Each first score indicates performance, of one first neural network, in processing the target data. The network device obtains, from the T first neural networks, one first neural network corresponding to a highest first score, to obtain a target score corresponding to the selected first neural network.

Specifically, the network device may store training data corresponding to the first neural network. In an implementation, the network device obtains a third neural network corresponding to the first neural network. Both a function and a network architecture of the third neural network are the same as those of the first neural network, but a quantity of neural architecture cells included in the third neural network is less than a quantity of neural architecture cells included in the first neural network. In other words, the third neural network is simpler than the first neural network. The network device may train the third neural network based on the training data until a convergence condition is met, to obtain a trained third neural network. The convergence condition may be a convergence condition that meets a loss function, or may be a convergence condition that a quantity of training times reaches a preset quantity of times.

After obtaining the trained third neural network, the network device may generate a score of the trained third neural network on the at least one score indicator, and determine the score of the trained third neural network on the at least one score indicator as a score of the first neural network on the at least one score indicator, to obtain the target score corresponding to the first indication information.

In another implementation, the network device may directly train the first neural network based on the training data until a convergence condition is met, to obtain a trained first neural network. The convergence condition may be a convergence condition that meets a loss function, or may be a convergence condition that a quantity of training times reaches a preset quantity of times. The network device may generate a score of the trained first neural network on the at least one score indicator, to obtain the target score corresponding to the first indication information.

405: The network device obtains new first indication information.

In this embodiment of this application, before generating a new first neural network, the network device needs to obtain the new first indication information. In an implementation, the first indication information is obtained according to the Dirichlet distribution (Dirichlet distribution) principle, that is, the preset search policy includes random sampling in the Dirichlet distribution space. The network device may obtain the new first indication information based on at least one piece of old first indication information and the target score one-to-one corresponding to each piece of old first indication information, where the new first indication information indicates the probability that each of the k to-be-selected neural network modules appears in the first neural architecture cell, and the new first indication information is used to generate the new first neural network.

Specifically, the network device may determine, from the at least one piece of old first indication information based on the at least one piece of old first indication information and the target score one-to-one corresponding to each piece of old first indication information, one piece of first indication information (which is referred to as "target indication information" in the following for ease of description) corresponding to a highest target score, generate a second distribution parameter based on the target indication information, and obtain the new first indication information based on the second distribution parameter. The new first indication information is included in second Dirichlet distribution space, and the second distribution parameter is a distribution parameter of the second Dirichlet distribution space.

For further understanding of this solution, the following discloses an example of a formula for obtaining the new first indication information:

$$\hat{p} \sim \mathrm{Dir}(\widehat{\alpha_1}, \dots, \widehat{\alpha_k}) \quad (5)$$

$$\widehat{\alpha_1} = \mathrm{k}\tilde{p}^*_i\beta + 1 \ \forall i = \{1, \dots, k\} \quad (6)$$

( $\widehat{\alpha_1}, \dots, \widehat{\alpha_k}$ ) indicates the second distribution parameter, $\mathrm{Dir}(\widehat{\alpha_1}, \dots, \widehat{\alpha_k})$ indicates a probability density function of the second Dirichlet distribution space corresponding to the new first indication information, $\hat{p}$ indicates the new first indication information obtained from the second Dirichlet distribution space, $\tilde{p}^*_i$ is included in $\tilde{p}^*$, $\tilde{p}^*$ indicates the target indication information (namely, one piece of first indication information, in the at least one piece of old first indication information, corresponding to a highest target score), $\tilde{p}_i$ indicates a value of an $i^{th}$ element in the first indication information, $\beta$ is a hyperparameter, and $\beta$ is a non-negative real parameter. A larger value of $\beta$ indicates a shorter distance between $\hat{p}$ and $\tilde{p}^*$ in the k-dimensional simplex space, and a closer value of $\beta$ to 0 indicates that the second Dirichlet distribution space is closer to uniform distribution without prior information. It should be understood that examples in the formula (5) and the formula (6) are merely for ease of understanding this solution, and are not intended to limit this solution.

In this embodiment of this application, a higher target score corresponding to the old first indication information indicates better performance, of the old first neural network, in processing the target data. The new first indication information is obtained based on the target score corresponding to each piece of old first indication information, and the new first indication information is used to generate the new first neural network. Therefore, this helps obtain a new first neural network with good performance. Because one piece of first indication information is sampled from the complete Dirichlet distribution space each time, over-fitting to local space in a sampling process of the first indication information is avoided. This ensures openness of the sampling process of the first indication information, and ensures that the new first neural network is optimized towards a neural network architecture with better performance.

In another implementation, if the network device performs obtaining according to the Dirichlet distribution (Dirichlet distribution) principle in step 401, that is, the preset search policy includes random sampling in the Dirichlet distribution space, a third distribution parameter may also be pre-configured on the network device. A concept of the third distribution parameter is similar to a concept of the first distribution parameter, and the third distribution parameter may be the same as or different from the first distribution parameter. The network device determines new Dirichlet distribution space based on the third distribution parameter, and performs random sampling in the new Dirichlet distribution space, to obtain new first indication information. The new first indication information indicates the probability that each of the k neural network modules appears in the neural architecture cell, and the new first indication information is used to generate a new first neural network.

In another implementation, if the network device obtains the first indication information according to the evolutionary algorithm in step 401, that is, the preset search policy includes the evolutionary algorithm, the network device may select new first indication information from the S pieces of first indication information based on the target score and the S pieces of first indication information that are obtained in step 404. Higher performance of the trained first neural network indicates a higher similarity between the new first indication information and the first indication information obtained in step 401. Lower performance of the trained first neural network indicates a lower similarity between the new first indication information and the first indication information obtained in step 401.

In another implementation, if the preset search policy in step 401 uses the random selection, that is, the preset search policy includes the random selection, in step 405, the network device may also randomly select one piece of new first indication information from the S pieces of first indication information.

Optionally, if the preset search policy further includes the Bayesian optimization algorithm in step 401, that is, the T pieces of first indication information are obtained in step 401, correspondingly, T pieces of new first indication information are also obtained in step 405 according to the Bayesian optimization algorithm.

406: The network device generates the new first neural network based on the new first indication information.

407: The network device obtains a new target score corresponding to the new first indication information, where the new target score indicates performance, of the new first neural network corresponding to the new first indication information, in processing the target data.

For specific implementations of step 406 and step 407 performed by the network device in this embodiment of this application, refer to the descriptions of step 402 to step 404. Details are not described herein again. After performing step 407, the network device may perform step 405 again, to continue to obtain new first indication information, generate a new first neural network based on the new first indication information, and perform step 407 again. The network device repeatedly performs step 405 to step 407 until a first preset condition is met, to obtain a plurality of target scores corresponding to the plurality of pieces of first indication information and one first neural network corresponding to each piece of first indication information.

The first preset condition may be that a quantity of repetition times of step 405 to step 407 reaches a preset quantity of times, time spent by the network device in repeatedly performing step 405 to step 407 reaches preset duration, a target score corresponding to the first indication information is greater than or equal to a preset threshold, or the like. The first preset condition may alternatively be represented as another type of preset condition. This is not limited herein.

408: The network device obtains second indication information from a plurality of pieces of first indication information based on a plurality of target scores corresponding to the plurality of pieces of first indication information, and obtains a target neural network corresponding to the second indication information.

In this embodiment of this application, after obtaining the plurality of target scores corresponding to the plurality of pieces of first indication information, the network device may further obtains one piece of second indication information from the plurality of pieces of first indication information based on the plurality of target scores corresponding to the plurality of pieces of first indication information, and determines a first neural network corresponding to the second indication information as the target neural network.

In one case, the target score corresponding to the second indication information is a highest target score in the plurality of target scores corresponding to the plurality of pieces of first indication information. In another case, a higher target score corresponding to one piece of first indication information indicates a higher probability that the first indication information is determined as the second indication information.

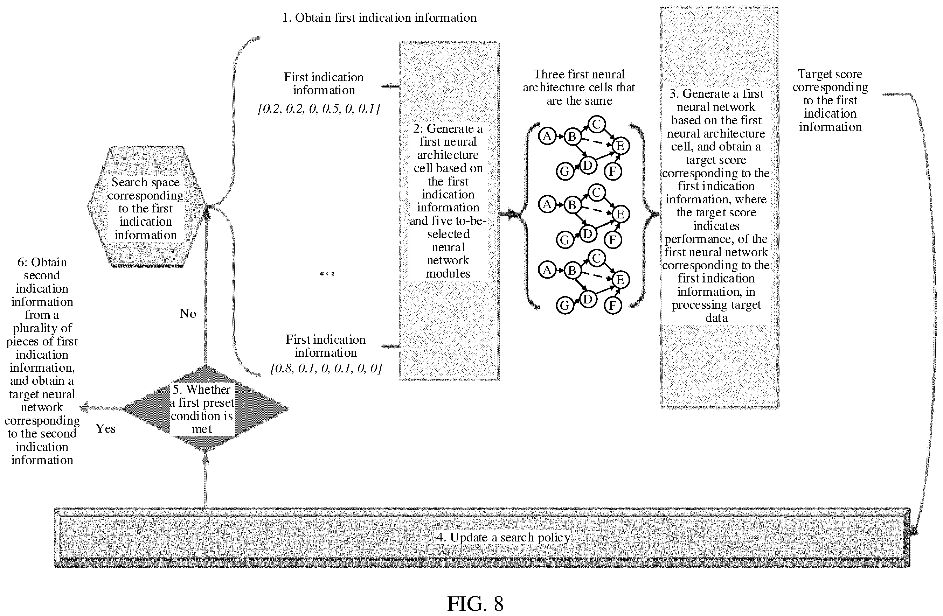

For more intuitive understanding of this solution, FIG. 8 is another schematic flowchart of a neural network obtaining method according to an embodiment of this application. In FIG. 8, an example in which a value of k is 5 and a value of N is 7 is used. 1. The network device obtains, according to the preset search policy, one piece of first indication information from the search space corresponding to the first indication information. The search space corresponding to the first indication information includes a plurality of pieces of first indication information. In FIG. 8, that the first indication information indicates probabilities that five to-be-selected neural network modules appear in the first neural architecture cell is used as an example. 2. The network device generates three first neural architecture cells that are the same based on the first indication information and the five to-be-selected neural network modules. In FIG. 8, that one first neural network requires three first neural architecture cells is used as an example.

3. The network device generates the first neural network based on the three first neural architecture cells that are the same, and obtains a target score corresponding to the first indication information obtained in step 1. The target score corresponding to the first indication information indicates performance, of the first neural network corresponding to the first indication information, in processing the target data. 4. The network device updates the search policy based on the target score corresponding to the first indication information. 5. The network device determines whether the first preset condition is met; and if the first preset condition is met, obtains second indication information from the plurality of pieces of first indication information, and obtains a target neural network corresponding to the second indication information; or if the first preset condition is not met, obtains, according to an updated search policy, one piece of new first indication information from the search space corresponding to the first indication information. It should be understood that for specific implementations of steps in FIG. 8, refer to the foregoing descriptions. The example in FIG. 8 is merely for ease of understanding this solution, and is not intended to limit this solution.

In this embodiment of this application, during research, a person skilled in the art finds that if a plurality of different neural architecture cells have a same neural network module, but different neural network modules correspond to different topology relationships, performance of the plurality of different neural architecture cells are close in processing the target data. Therefore, in this embodiment of this application, the second indication information is obtained from at least one piece of first indication information, and the target neural network corresponding to the second indication information is further obtained. The first indication information only indicates a probability and/or a quantity of times that each of k neural network modules appears in a neural architecture cell, and no longer indicates a topology relationship between different neural network modules. Therefore, search space corresponding to the neural architecture cell is greatly reduced, computer resources required in an entire neural network obtaining process is reduced, and time costs are reduced.

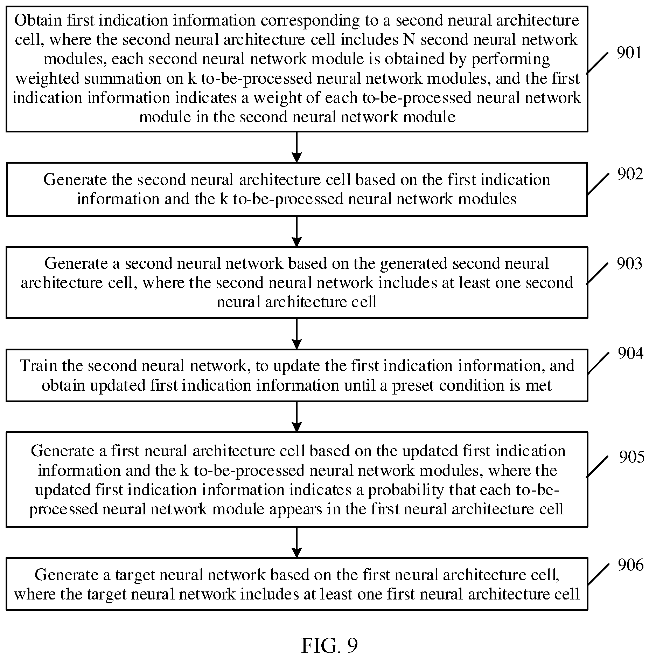

According to an embodiment of this application, another neural network obtaining method is further provided. Specifically, FIG. 9 is a schematic flowchart of a neural network obtaining method according to an embodiment of this application. The neural network obtaining method according to an embodiment of this application may include the following steps.

901: A network device obtains first indication information corresponding to a second neural architecture cell, where the second neural architecture cell includes N second neural network modules, each second neural network module is obtained by performing weighted summation on k to-be-processed neural network modules, and the first indication information indicates a weight of each to-be-processed neural network module in the second neural network module.

In this embodiment of this application, the network device needs to obtain the first indication information corresponding to the second neural architecture cell. The second neural architecture cell includes the N second neural network modules, each second neural network module is obtained by performing weighted summation on the k to-be-processed neural network modules, and the first indication information indicates a weight of each to-be-processed neural network module in the second neural network module, that is, a sum of k values included in the first indication information is 1.

For a specific representation form of the first indication information and a manner of obtaining the first indication information, refer to the descriptions of step 401 in the embodiment corresponding to FIG. 4. Details are not described herein again. It should be noted that the sum of the k values included in the first indication information in this embodiment of this application is 1.

902: The network device generates the second neural architecture cell based on the first indication information and the k to-be-processed neural network modules.

In this embodiment of this application, the network device may perform weighted summation on the k to-be-processed neural network modules based on the first indication information, to generate one second neural network module, and generate one second neural architecture cell based on the N second neural network modules and a first rule. For a meaning of the first rule, refer to descriptions in the embodiment corresponding to FIG. 4. "A relationship between the second neural network module and the second neural architecture cell" is similar to "a relationship between the first neural network module and the first neural architecture cell" in the embodiment corresponding to FIG. 4. Details are not described herein again.

903: The network device generates a second neural network based on the generated second neural architecture cell, where the second neural network includes at least one second neural architecture cell.

In this embodiment of this application, the network device may obtain H second neural architecture cells that are the same by performing step 902, and generate the second neural network according to a second rule and the H first neural architecture cells. H is an integer greater than or equal to 1. For a meaning of the second rule, refer to the descriptions in the embodiment corresponding to FIG. 4. "A relationship between the second neural architecture cell and the second neural network" is similar to "a relationship between the first neural architecture cell and the first neural network" in the embodiment corresponding to FIG. 4. Details are not described herein again.

904: The network device trains the second neural network, to update the first indication information, and obtains updated first indication information until a preset condition is met.

In this embodiment of this application, a training data set corresponding to the second neural network may be pre-configured on the network device. The network device may train the second neural network based on the training data set, to update a first weight parameter (that is, update the first indication information) and a second weight parameter in the second neural network, and obtain the updated first indication information and a trained second neural network until the preset condition is met. The first weight parameter is a weight parameter corresponding to each to-be-processed neural network module in the second neural network, that is, the first weight parameter is a weight parameter corresponding to the first indication information. The second weight parameter is a weight parameter other than the first weight parameter in the second neural network.

Specifically, in one time of training of the second neural network, the network device may obtain target training data and an expected result corresponding to the target training data from the training data set, input the target training data into the second neural network, and generate, by using the second neural network, a prediction result corresponding to the target training data.

The network device generates a function value of a target loss function based on an expected result corresponding to the target training data and the prediction result corresponding to the target training data. The target loss function indicates a similarity between the expected result corresponding to the target training data and the prediction result corresponding to the target training data.

After generating, by using the second neural network, the prediction result corresponding to the target training data, the network device may further generate a target score corresponding to the second neural network. The target score corresponding to the second neural network indicates performance, of the second neural network, in processing target data. For a concept of the target score, refer to descriptions in the embodiment corresponding to FIG. 4.

The network device keeps the second weight parameter in the second neural network unchanged, and reversely updates a value of the first weight parameter in the second neural network based on the target score (that is, the first indication information is updated). The network device keeps the first weight parameter in the second neural network unchanged, and reversely updates a value of the second weight parameter in the second neural network based on the value of the target loss function, to complete one time of training of the second neural network.

The network device repeatedly performs the foregoing operations for a plurality of times, to implement iterative training on the second neural network until a second preset condition is met. The network device may determine the updated first indication information based on a final value of the first weight parameter. The second preset condition may be any one or more of the following: a quantity of iterations reaches a preset quantity of times, the target score is greater than or equal to a preset threshold, or the target loss function meets a convergence condition. A specific representation form of the target loss function needs to be determined based on a specific function of the second neural network. This is not limited herein.

905: The network device generates the first neural architecture cell based on the updated first indication information and the k to-be-processed neural network modules, where the updated first indication information indicates a probability that each to-be-processed neural network module appears in the first neural architecture cell.

906: The network device generates a target neural network based on the first neural architecture cell, where the target neural network includes at least one first neural architecture cell.

In this embodiment of this application, for specific implementations in which the network device performs step 905 and step 906, refer to the descriptions of the specific implementations of step 402 and step 403 in the embodiment corresponding to FIG. 4. Differences lie only in two aspects. First, in step 402, the network device generates the first neural architecture cell based on the first indication information and the k to-be-processed neural network modules; and in step 905, the network device generates the first neural architecture cell based on the updated first indication information and the k to-be-processed neural network modules. Second, in step 403, the network device generates the first neural network based on the first neural architecture cell; and in step 906, the network device generates the final target neural network based on the first neural architecture cell. A relationship between the target neural network and the first neural network is described in the embodiment corresponding to FIG. 4. Details are not described herein again.

In this embodiment of this application, another implementation of automatically generating the target neural network is provided, to improve implementation flexibility of this solution.

2. Inference phase of the target neural network

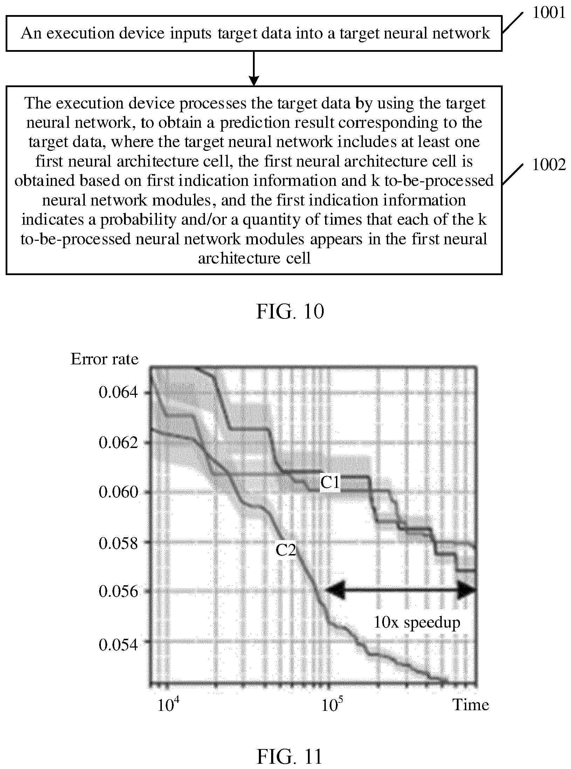

According to an embodiment of this application, specifically, FIG. 10 is a schematic flowchart of a data processing method according to an embodiment of this application. The data processing method provided in this embodiment of this application may include the following steps.

1001: An execution device inputs target data into a target neural network.

1002: The execution device processes the target data by using the target neural network, to obtain a prediction result corresponding to the target data, where the target neural network includes at least one first neural architecture cell, the first neural architecture cell is obtained based on first indication information and k to-be-processed neural network modules, and the first indication information indicates a probability and/or a quantity of times that each of the k to-be-processed neural network modules appears in the first neural architecture cell.

In this embodiment of this application, for a specific representation form of the target data, a specific representation form of the target neural network, a relationship between the target neural network and the first neural architecture cell, and a relationship between the first neural architecture cell and the neural network module, refer to the descriptions in the foregoing embodiments. Details are not described herein again. The target neural network may be automatically generated by using the method in the embodiment corresponding to FIG. 4, or may be automatically generated by using the method in the embodiment corresponding to FIG. 9. For a specific process of automatically generating the target neural network, refer to descriptions in the embodiment corresponding to FIG. 4 or FIG. 9.

According to an embodiment of this application, an inference method of the target neural network is further provided, to extend application scenarios of this solution, and improve implementation flexibility of this solution.

For more intuitive understanding of this solution, the following describes beneficial effect brought by embodiments of this application based on actual test data. First, beneficial effect brought by the neural network obtaining method used in the embodiment corresponding to FIG. 4 is shown. FIG. 11 is a schematic diagram of beneficial effect of a neural network obtaining method according to an embodiment of this application. In FIG. 11, an example in which an experiment is performed on a CIFAR-10 dataset is used. A horizontal coordinate in FIG. 11 indicates duration, and a vertical coordinate in FIG. 11 indicates an error rate, of a finally obtained target neural network, obtained when the target neural network processes target data.

As shown in FIG. 11, B 1 indicates two curves generated in a process of generating a target neural network by using two existing methods, and B2 indicates one curve generated in a process of generating a target neural network by using the method provided in the embodiment corresponding to FIG. 4. B 1 is compared with B2, and it can be learned that when obtained error rates of target neural networks are consistent, duration spent in generating the target neural network by using the method provided in the embodiment corresponding to FIG. 4 can be greatly shortened, and a target neural network with a lower error rate can be obtained by using the method provided in the embodiment corresponding to FIG. 4.

Then, beneficial effect brought by the neural network obtaining method in the embodiment corresponding to FIG. 9 is shown. Refer to Table 1. An example in which an experiment is performed on an ImageNet16 dataset is used in Table 1.

**Table 1**

|  | ImageNet16 | Training epoch |
|---|---|---|
| RSPS | 68.86±3.9 | 50 |
| GAEA DARTS | 58.41±4.2 | 25 |
| Embodiment corresponding to FIG. 9 | 58.00±2.9 | 20 |

Refer to Table 1. RSPS and GAEA DARTS are two existing methods for automatically generating a target neural network, 68.86±3.9 indicates an error rate of a target neural network obtained by using the RSPS method when the target neural network processes target data, 58.41+4.2 indicates an error rate, of a target neural network obtained by using the GAEA DARTS method, obtained when the target neural network processes target data, and 58.00 + 2.9 indicates an error rate, of the target neural network obtained by using the method provided in the embodiment corresponding to FIG. 9, obtained when the target neural network processes the target data. A third row in Table 1 indicates duration spent in obtaining the target neural network by using each method. It can be learned from data in Table 1 that the embodiment corresponding to FIG. 9 not only requires a shorter training epoch (training epoch), but also obtains a final target neural network with better performance.

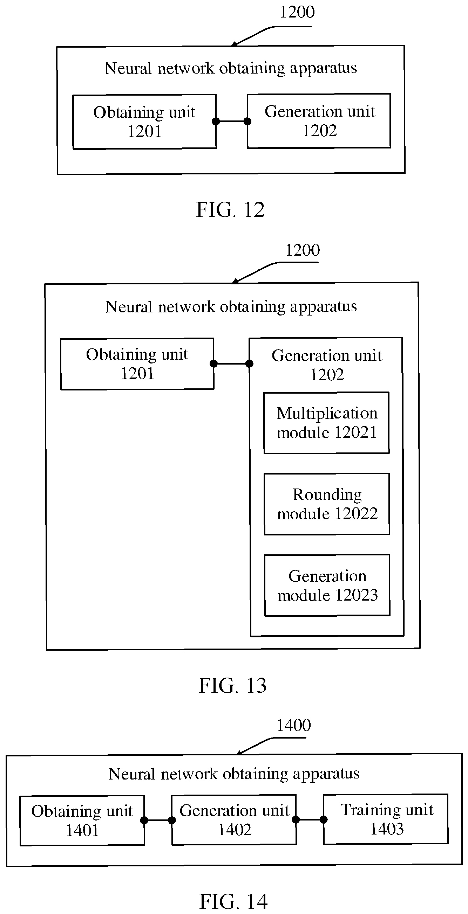

According to the embodiments corresponding to FIG. 1 to FIG. 11, to better implement the foregoing solutions in embodiments of this application, the following further provides related devices configured to implement the foregoing solutions. FIG. 12 is a schematic diagram of a structure of a neural network obtaining apparatus according to an embodiment of this application. A neural network obtaining apparatus 1200 includes: an obtaining unit 1201, configured to obtain first indication information corresponding to a first neural architecture cell, where the first indication information indicates a probability and/or a quantity of times that each of k to-be-selected neural network modules appears in the first neural architecture cell, and k is a positive integer; and a generation unit 1202, configured to: generate the first neural architecture cell based on the first indication information and the k to-be-selected neural network modules, and generate a first neural network based on the generated first neural architecture cell, where the first neural network includes at least one first neural architecture cell. The obtaining unit 1201 is further configured to obtain a target score corresponding to the first indication information. The target score indicates performance, of the first neural network corresponding to the first indication information, in processing target data. The obtaining unit 1201 is further configured to: obtain second indication information from a plurality of pieces of first indication information based on a plurality of target scores corresponding to the plurality of pieces of first indication information, and obtain a target neural network corresponding to the second indication information.

In a possible design, the first indication information is included in Dirichlet distribution space.

In a possible design, the obtaining unit 1201 is further configured to obtain new first indication information based on the first indication information and the target score corresponding to the first indication information, where the new first indication information indicates the probability that each of the k to-be-selected neural network modules appears in the first neural architecture cell, and the new first indication information is used to generate a new first neural network.

In a possible design, FIG. 13 is a schematic diagram of another structure of a neural network obtaining apparatus according to an embodiment of this application. The first indication information includes k first probability values corresponding to the k to-be-selected neural network modules, one first probability value indicates a probability that one to-be-selected neural network module appears in the first neural architecture cell. The generation unit 1202 specifically includes: a multiplication module 12021, configured to multiply each first probability value by N, to obtain a target result, where the target result includes k first values; a rounding module 12022, configured to perform rounding processing on each first value in the target result, to obtain a rounded target result, where the rounded target result includes k second values, the k second values are all integers, a sum of the k second values is N, and one second value indicates a quantity of times that one to-be-selected neural network module appears in the first neural architecture cell; and a generation module 12023, configured to generate the first neural architecture cell based on the rounded target result and the k to-be-selected neural network modules, where N neural network modules included in the first neural architecture cell meet a constraint of the rounded target result, and N is a positive integer.

In a possible design, the generation unit 1202 is specifically configured to: obtain, based on the first indication information, N first neural network modules by sampling the k to-be-selected neural network modules, and generate the first neural architecture cell based on the N first neural network modules, where the first indication information indicates a probability that each to-be-selected neural network module is sampled, and the first neural architecture cell includes the N first neural network modules.

In a possible design, the target data is any one of the following: an image, speech, text, or sequence data.

It should be noted that content such as information exchange and an execution process between the modules/units in the neural network obtaining apparatus 1200 is based on a same concept as the method embodiments in embodiments of this application. For specific content, refer to the descriptions in the method embodiments of this application. Details are not described herein again.

An embodiment of this application further provides a neural network obtaining apparatus. FIG. 14 is a schematic diagram of a structure of a neural network obtaining apparatus according to an embodiment of this application. A neural network obtaining apparatus 1400 includes: an obtaining unit 1401, configured to obtain first indication information corresponding to a second neural architecture cell, where the second neural architecture cell includes N second neural network modules, each second neural network module is obtained by performing weighted summation on k to-be-processed neural network modules, the first indication information indicates a weight of each to-be-processed neural network module in the second neural network module, and N is an integer greater than or equal to 11; a generation unit 1402, configured to: generate the second neural architecture cell based on the first indication information and the k to-be-processed neural network modules, and generate a second neural network based on the generated second neural architecture cell, where the second neural network includes at least one second neural architecture cell; and a training unit 1403, configured to: train the second neural network, to update the first indication information, and obtain updated first indication information until a preset condition is met. The generation unit 1402 is configured to: generate a first neural architecture cell based on the updated first indication information and the k to - be-processed neural network modules, and generate a target neural network based on the generated first neural architecture cell. The updated first indication information indicates a probability that each to-be-processed neural network module appears in the first neural architecture cell, and the target neural network includes at least one first neural architecture cell.

In a possible design, the first indication information is included in Dirichlet distribution space.

It should be noted that content such as information exchange and an execution process between the modules/units in the neural network obtaining apparatus 1400 is based on a same concept as the method embodiments in embodiments of this application. For specific content, refer to the descriptions in the method embodiments of this application. Details are not described herein again.

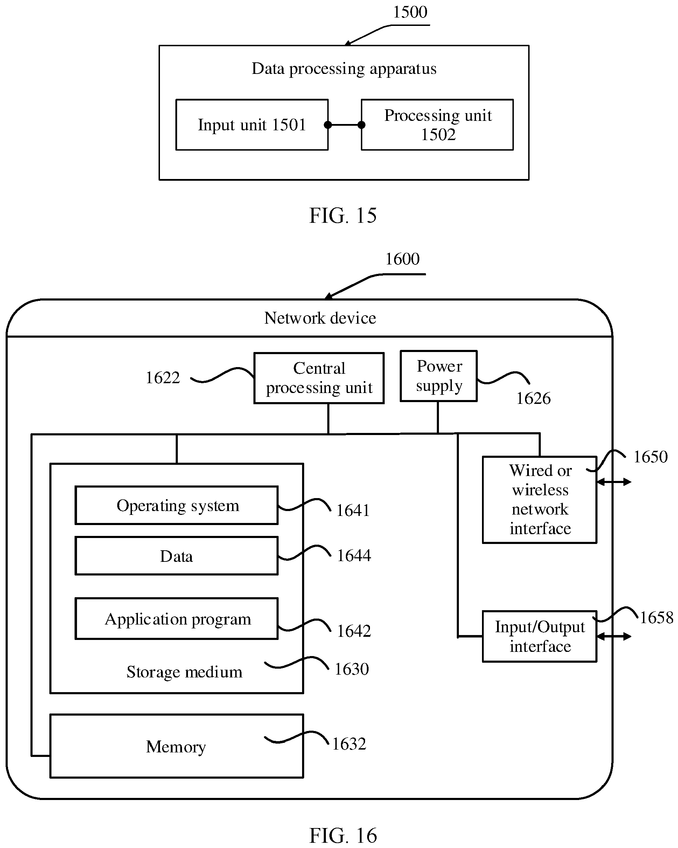

An embodiment of this application further provides a data processing apparatus. FIG. 15 is a schematic diagram of a structure of a data processing apparatus according to an embodiment of this application. A data processing apparatus 1500 includes: an input unit 1501, configured to input target data into a target neural network; and a processing unit 1502, configured to process the target data by using the target neural network, to obtain a prediction result corresponding to the target data. The target neural network includes at least one first neural architecture cell, the first neural architecture cell is obtained based on first indication information and k to-be-processed neural network modules, the first indication information indicates a probability and/or a quantity of times that each of the k to-be-processed neural network modules appears in the first neural architecture cell, and k is a positive integer.

In a possible design, the first indication information is included in Dirichlet distribution space.

It should be noted that content such as information exchange and an execution process between the modules/units in the data processing apparatus 1500 is based on a same concept as the method embodiments in embodiments of this application. For specific content, refer to the descriptions in the method embodiments of this application. Details are not described herein again.

The following describes a network device provided in an embodiment of this application. FIG. 16 is a schematic diagram of a structure of a network device according to an embodiment of this application. Specifically, a network device 1600 is implemented by one or more servers. The network device 1600 may vary greatly with configuration or performance, and may include one or more central processing units (central processing unit, CPU) 1622 (for example, one or more processors), a memory 1632, and one or more storage media 1630 (for example, one or more mass storage devices) that store an application program 1642 or data 1644. The memory 1632 and the storage medium 1630 may be transitory storage or persistent storage. The program stored in the storage medium 1630 may include one or more modules (not shown in the figure). Each module may include a series of instruction operations for the network device. Further, the central processing unit 1622 may be configured to communicate with the storage medium 1630, to perform, on the network device 1600, the series of instruction operations in the storage medium 1630.

The network device 1600 may further include one or more power supplies 1626, one or more wired or wireless network interfaces 1650, one or more input/output interfaces 1658, and/or one or more operating systems 1641, such as Windows Server™, Mac OS X™, Unix™, Linux™, or FreeBSD™.

In this embodiment of this application, in a case, the neural network obtaining apparatus 1200 described in the embodiment corresponding to FIG. 12 or FIG. 13 is configured on the network device 1600, and the central processing unit 1622 is configured to perform the neural network obtaining method performed by the network device in the embodiment corresponding to FIG. 4. It should be noted that a specific manner in which the central processing unit 1622 performs the foregoing steps is based on a same concept as the method embodiments corresponding to FIG. 4 in this application. Technical effect brought by the method is the same as technical effect brought by the method embodiments corresponding to FIG. 4 in this application. For specific content, refer to the descriptions in the foregoing method embodiments in this application. Details are not described herein again.

In another case, the neural network obtaining apparatus 1200 described in the embodiment corresponding to FIG. 14 is configured on the network device 1600, and the central processing unit 1622 is configured to perform the neural network obtaining method performed by the network device in the embodiment corresponding to FIG. 9. It should be noted that a specific manner in which the central processing unit 1622 performs the foregoing steps is based on a same concept as the method embodiments corresponding to FIG. 9 in this application. Technical effect brought by the method is the same as technical effect brought by the method embodiments corresponding to FIG. 9 in this application. For specific content, refer to the descriptions in the foregoing method embodiments in this application. Details are not described herein again.

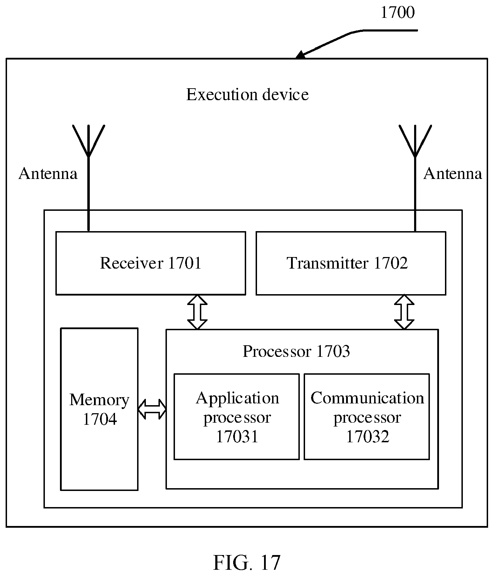

An embodiment of this application further provides an execution device. FIG. 17 is a schematic diagram of a structure of an execution device according to an embodiment of this application. An execution device 1700 may specifically be represented as a virtual reality VR device, a mobile phone, a tablet, a notebook computer, an intelligent robot, a smart home, a smart wearable device, a monitoring data processing device, a radar data processing device, or the like. This is not limited herein. Specifically, the execution device 1700 includes: a receiver 1701, a transmitter 1702, a processor 1703, and a memory 1704 (there may be one or more processors 1703 in the execution device 1700, and one processor is used as an example in FIG. 17). The processor 1703 may include an application processor 17031 and a communication processor 17032. In some embodiments of this application, the receiver 1701, the transmitter 1702, the processor 1703, and the memory 1704 may be connected by using a bus or in another manner.

The memory 1704 may include a read-only memory and a random access memory, and provide instructions and data for the processor 1703. A part of the memory 1704 may further include a non-volatile random access memory (non-volatile random access memory, NVRAM). The memory 1704 stores a processor and operation instructions, an executable module or a data structure, a subnet thereof, or an expanded set thereof. The operation instructions may include various operation instructions to implement various operations.

The processor 1703 controls an operation of the execution device. During specific application, components of the execution device are coupled to each other by using a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 1703 or may be implemented by the processor 1703. The processor 1703 may be an integrated circuit chip and has a signal processing capability. In an implementation process, various steps in the foregoing method may be completed by using an integrated logic circuit of hardware in the processor 1703 or an instruction in a form of software. The processor 1703 may be a general-purpose processor, a digital signal processor (digital signal processor, DSP), a microprocessor, or a microcontroller. The processor 1703 may further include an application-specific integrated circuit (application-specific integrated circuit, ASIC), a field programmable gate array (field programmable gate array, FPGA) or another programmable logic device, a discrete gate, or a transistor logic device, or a discrete hardware component. The processor 1703 may implement or perform the methods, the steps, and logical block diagrams that are disclosed in embodiments of this application. The general-purpose processor may be a microprocessor, or the processor may be any conventional processor or the like. Steps of the method disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1704, and the processor 1703 reads information in the memory 1704 and completes the steps in the foregoing methods in combination with hardware of the processor.

The receiver 1701 may be configured to receive input digital or character information, and generate a signal input related to setting and function control of the execution device. The transmitter 1702 may be configured to output digital or character information by using a first interface. The transmitter 1702 may further be configured to send instructions to a disk group by using the first interface, to modify data in the disk group. The transmitter 1702 may further include a display device such as a display screen.

In this embodiment of this application, the data processing apparatus 1500 described in the embodiment corresponding to FIG. 15 may be configured on the execution device 1700, and the application processor 17031 in the processor 1703 is configured to perform the neural network processing method performed by the execution device in the embodiment corresponding to FIG. 9. It should be noted that a specific manner in which the application processor 17031 performs the foregoing steps is based on a same concept as the method embodiments corresponding to FIG.

10 in this application. Technical effect brought by the method is the same as technical effect brought by the method embodiments corresponding to FIG. 10 in this application. For specific content, refer to the descriptions in the foregoing method embodiments in this application. Details are not described herein again.

An embodiment of this application further provides a computer program product. When the computer program product runs on a computer, the computer is enabled to perform the steps performed by the execution device in the method described in the embodiment shown in FIG. 10, the steps performed by the network device in the method described in the embodiment shown in FIG. 4, or the steps performed by the network device in the method described in the embodiments shown in FIG. 9.

An embodiment of this application further provides a computer-readable storage medium. The computer-readable storage medium stores a program for signal processing. When the program is run on a computer, the computer is enabled to perform the steps performed by the execution device in the method described in the embodiment shown in FIG. 10, the steps performed by the network device in the method described in the embodiment shown in FIG. 4, or the steps performed by the network device in the method described in the embodiments shown in FIG. 9.

The neural network obtaining apparatus, the data processing apparatus, the execution device, and the network device in embodiments of this application may specifically be chips. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the data processing method described in the embodiment shown in FIG. 10, the neural network obtaining method described in the embodiment shown in FIG. 4, or the neural network obtaining method described in the embodiments shown in FIG. 9. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

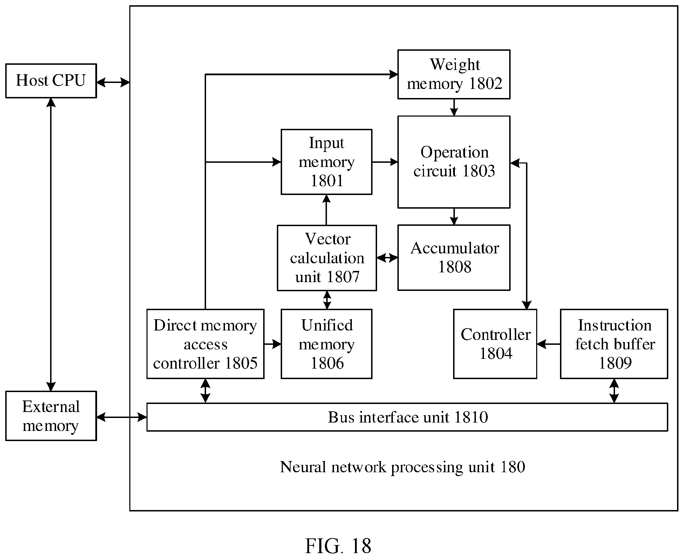

Specifically, FIG. 18 is a schematic diagram of a structure of a chip according to an embodiment of this application. The chip may be represented as a neural network processing unit NPU 180. The NPU 180 is mounted to a host CPU (Host CPU) as a coprocessor, and the host CPU allocates a task. A core part of the NPU is an operation circuit 1803, and a controller 1804 controls the operation circuit 1803 to extract matrix data in a memory and perform a multiplication operation.

In some implementations, the operation circuit 1803 includes a plurality of processing engines (Processing Engine, PE) inside. In some implementations, the operation circuit 1803 is a two-dimensional systolic array. The operation circuit 1803 may alternatively be a one-dimensional systolic array or another electronic circuit capable of performing mathematical operations such as multiplication and addition. In some implementations, the operation circuit 1803 is a general-purpose matrix processor.

For example, it is assumed that there is an input matrix A, a weight matrix B, and an output matrix C. The operation circuit fetches, from a weight memory 1802, data corresponding to the matrix B, and caches the data on each PE in the operation circuit. The operation circuit fetches data of the matrix A from an input memory 1801, to perform a matrix operation on the matrix B, and stores an obtained partial result or an obtained final result of the matrix in an accumulator (accumulator) 1808.

A unified memory 1806 is configured to store input data and output data. The weight data is directly transferred to the weight memory 1802 by using a direct memory access controller (Direct Memory Access Controller, DMAC) 1805. The input data is also transferred to the unified memory 1806 by using the DMAC.

A BIU is a bus interface unit, namely, a bus interface unit 1810, and is configured for interaction between an AXI bus and the DMAC and interaction between the AXI bus and an instruction fetch buffer (Instruction Fetch Buffer, IFB) 1809.

The bus interface unit (bus interface unit, BIU) 1810 is used by the instruction fetch buffer 1809 to obtain instructions from an external memory, and is further used by the direct memory access controller 1805 to obtain original data of the input matrix A or the weight matrix B from the external memory.

The DMAC is mainly configured to transfer input data in the external memory DDR to the unified memory 1806, transfer weight data to the weight memory 1802, or transfer input data to the input memory 1801.

A vector calculation unit 1807 includes a plurality of operation processing units. If required, further processing is performed on an output of the operation circuit, for example, vector multiplication, vector addition, an exponential operation, a logarithmic operation, or size comparison. The vector calculation unit 1207 is mainly configured to perform network calculation at a non-convolutional/fully connected layer in a neural network, for example, batch normalization (batch normalization), pixel-level summation, and upsampling on a feature plane.

In some implementations, the vector calculation unit 1807 can store a processed output vector in the unified memory 1806. For example, the vector calculation unit 1807 may apply a linear function or a non-linear function to the output of the operation circuit 1803, for example, perform linear interpolation on a feature plane extracted at a convolutional layer. For another example, the linear function or the non-linear function is applied to a vector of an accumulated value to generate an activation value. In some implementations, the vector calculation unit 1807 generates a normalized value, a pixel-level summation value, or both. In some implementations, the processed output vector can be used as activation input of the operation circuit 1803, for example, to be used in a subsequent layer in the neural network.

The instruction fetch buffer (instruction fetch buffer) 1809 connected to the controller 1804 is configured to store instructions used by the controller 1804.

The unified memory 1806, the input memory 1801, the weight memory 1802, and the instruction fetch buffer 1809 are all on-chip memories. The external memory is private to a hardware architecture of the NPU.

An operation at each layer in the first neural network, the second neural network, and the target neural network shown in FIG. 4 to FIG. 10 may be performed by the operation circuit 1803 or the vector calculation unit 1807.

The processor mentioned above may be a general-purpose central processing unit, a microprocessor, an ASIC, or one or more integrated circuits for controlling program execution in the method in the first aspect.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially, or the part contributing to a current technology may be implemented in a form of a software product. The computer software product is stored in a readable storage medium, for example, a floppy disk, a USB flash drive, a removable hard disk, a ROM, a RAM, a magnetic disk, or an optical disc on a computer, and includes several instructions for instructing a computer device (which may be a personal computer, a network device, or a network device) to perform the method described in embodiments of this application.

All or some of the embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instruction may be transmitted from a website, computer, network device, or data center to another website, computer, network device, or data center in a wired (for example, using a coaxial cable, an optical fiber, or a digital subscriber line (DSL)) or wireless (for example, via infrared, radio, or microwaves) manner. The computer-readable storage medium may be any usable medium accessible by the computer, or a data storage device, such as a network device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

**Claims**

1. A neural network obtaining method, wherein the method comprises:

   obtaining first indication information corresponding to a first neural architecture cell, wherein the first indication information indicates a probability and/or a quantity of times that each of k to-be-selected neural network modules appears in the first neural architecture cell, and k is a positive integer;
   generating the first neural architecture cell based on the first indication information and the k to-be-selected neural network modules, and generating a first neural network based on the generated first neural architecture cell, wherein the first neural network comprises at least one first neural architecture cell;
   obtaining a target score corresponding to the first indication information, wherein the target score indicates performance, of the first neural network corresponding to the first indication information, in processing target data; and

obtaining second indication information from a plurality of pieces of first indication information based on a plurality of target scores corresponding to the plurality of pieces of first indication information, and obtaining a target neural network corresponding to the second indication information.

2. The method according to claim 1, wherein the first indication information is comprised in Dirichlet distribution space.

3. The method according to claim 2, wherein before the obtaining a target score corresponding to the first indication information, the method further comprises:
obtaining new first indication information based on the first indication information and the target score corresponding to the first indication information, wherein the new first indication information indicates the probability that each of the k to-be-selected neural network modules appears in the first neural architecture cell, and the new first indication information is used to generate a new first neural network.

4. The method according to claim 2, wherein the first indication information comprises k first probability values corresponding to the k to-be-selected neural network modules, one first probability value indicates a probability that one to-be-selected neural network module appears in the first neural architecture cell, and the generating the first neural architecture cell based on the first indication information and the k to-be-selected neural network modules comprises:

multiplying each first probability value by N, to obtain a target result, wherein the target result comprises k first values;
performing rounding processing on each first value in the target result, to obtain a rounded target result, wherein the rounded target result comprises k second values, the k second values are all integers, a sum of the k second values is N, and one second value indicates a quantity of times that one to-be-selected neural network module appears in the first neural architecture cell; and
generating the first neural architecture cell based on the rounded target result and the k to-be-selected neural network modules, wherein N neural network modules comprised in the first neural architecture cell meet a constraint of the rounded target result, and N is a positive integer.

5. The method according to any one of claims 1 to 4, wherein the generating the first neural architecture cell based on the first indication information and the k to-be-selected neural network modules comprises:

obtaining, based on the first indication information, N first neural network modules by sampling the k to-be-selected neural network modules, wherein the first indication information indicates a probability that each to-be-selected neural network module is sampled; and
generating the first neural architecture cell based on the N first neural network modules, wherein the first neural architecture cell comprises the N first neural network modules.

6. The method according to any one of claims 1 to 4, wherein the target data is any one of the following: an image, speech, text, or sequence data.

7. A neural network obtaining method, wherein the method comprises:

obtaining first indication information corresponding to a second neural architecture cell, wherein the second neural architecture cell comprises N second neural network modules, each second neural network module is obtained by performing weighted summation on k to-be-processed neural network modules, the first indication information indicates a weight of each to-be-processed neural network module in the second neural network module, and N is an integer greater than or equal to 1;
generating the second neural architecture cell based on the first indication information and the k to-be-processed neural network modules, and generating a second neural network based on the generated second neural architecture cell, wherein the second neural network comprises at least one second neural architecture cell;
training the second neural network, to update the first indication information, and obtaining updated first indication information until a preset condition is met; and
generating a first neural architecture cell based on the updated first indication information and the k to-be-processed neural network modules, and generating a target neural network based on the generated first neural architecture cell, wherein the updated first indication information indicates a probability that each to-be-processed neural network module appears in the first neural architecture cell, and the target neural network comprises at least one first neural architecture cell.

8. The method according to claim 7, wherein the first indication information is comprised in Dirichlet distribution space.

9. A data processing method, wherein the method comprises:

inputting target data into a target neural network; and
processing the target data by using the target neural network, to obtain a prediction result corresponding to the target data, wherein the target neural network comprises at least one first neural architecture cell, the first neural architecture cell is obtained based on first indication information and k to-be-processed neural network modules, the first indication information indicates a probability and/or a quantity of times that each of the k to-be-processed neural network modules appears in the first neural architecture cell, and k is a positive integer.

10. The method according to claim 9, wherein the first indication information is comprised in Dirichlet distribution space.

11. A neural network obtaining apparatus, wherein the apparatus comprises:

an obtaining unit, configured to obtain first indication information corresponding to a first neural architecture cell, wherein the first indication information indicates a probability and/or a quantity of times that each of k to-be-selected neural network modules appears in the first neural architecture cell, and k is a positive integer; and
a generation unit, configured to: generate the first neural architecture cell based on the first indication information and the k to-be-selected neural network modules, and generate a first neural network based on the generated first neural architecture cell, wherein the first neural network comprises at least one first neural architecture cell, wherein
the obtaining unit is further configured to obtain a target score corresponding to the first indication information, wherein the target score indicates performance, of the first neural network corresponding to the first indication information, in processing target data; and
the obtaining unit is further configured to: obtain second indication information from a plurality of pieces of first indication information based on a plurality of target scores corresponding to the plurality of pieces of first indication information, and obtain a target neural network corresponding to the second indication information.

12. The apparatus according to claim 11, wherein the first indication information is comprised in Dirichlet distribution space.

13. The apparatus according to claim 12, wherein
the obtaining unit is further configured to obtain new first indication information based on the first indication information and the target score corresponding to the first indication information, wherein the new first indication information indicates the probability that each of the k to-be-selected neural network modules appears in the first neural architecture cell, and the new first indication information is used to generate a new first neural network.

14. The apparatus according to claim 12, wherein the first indication information comprises k first probability values corresponding to the k to-be-selected neural network modules, one first probability value indicates a probability that one to-be-selected neural network module appears in the first neural architecture cell, and the generation unit specifically comprises:

a multiplication module, configured to multiply each first probability value by N, to obtain a target result, wherein the target result comprises k first values;
a rounding module, configured to perform rounding processing on each first value in the target result, to obtain a rounded target result, wherein the rounded target result comprises k second values, the k second values are all integers, a sum of the k second values is N, and one second value indicates a quantity of times that one to-be-selected neural network module appears in the first neural architecture cell; and
a generation module, configured to generate the first neural architecture cell based on the rounded target result and the k to-be-selected neural network modules, wherein N neural network modules comprised in the first neural architecture cell meet a constraint of the rounded target result, and N is a positive integer.

15. The apparatus according to any one of claims 11 to 14, wherein
the generation unit is specifically configured to: obtain, based on the first indication information, N first neural network modules by sampling the k to-be-selected neural network modules, and generate the first neural architecture cell based on the N first neural network modules, wherein the first indication information indicates a probability that each to-be-selected neural network module is sampled, and the first neural architecture cell comprises the N first neural network modules.

16. The apparatus according to any one of claims 11 to 14, wherein the target data is any one of the following: an image, speech, text, or sequence data.

17. A neural network obtaining apparatus, wherein the apparatus comprises:

an obtaining unit, configured to obtain first indication information corresponding to a second neural architecture cell, wherein the second neural architecture cell comprises N second neural network modules, each second neural network module is obtained by performing weighted summation on k to-be-processed neural network modules, the first indication information indicates a weight of each to-be-processed neural network module in the second neural network module, and N is an integer greater than or equal to 11;
a generation unit, configured to: generate the second neural architecture cell based on the first indication information and the k to-be-processed neural network modules, and generate a second neural network based on the generated second neural architecture cell, wherein the second neural network comprises at least one second neural architecture cell; and
a training unit, configured to: train the second neural network, to update the first indication information, and obtain updated first indication information until a preset condition is met, wherein
the generation unit is configured to: generate a first neural architecture cell based on the updated first indication information and the k to-be-processed neural network modules, and generate a target neural network based on the generated first neural architecture cell, wherein the updated first indication information indicates a probability that each to-be-processed neural network module appears in the first neural architecture cell, and the target neural network comprises at least one first neural architecture cell.

18. The apparatus according to claim 17, wherein the first indication information is comprised in Dirichlet distribution space.

19. A data processing apparatus, wherein the apparatus comprises:

an input unit, configured to input target data into a target neural network; and
a processing unit, configured to process the target data by using the target neural network, to obtain a prediction result corresponding to the target data, wherein the target neural network comprises at least one first neural architecture cell, the first neural architecture cell is obtained based on first indication information and k to-be-processed neural network modules, the first indication information indicates a probability and/or a quantity of times that each of the k to-be-processed neural network modules appears in the first neural architecture cell, and k is a positive integer.

20. The apparatus according to claim 19, wherein the first indication information is comprised in Dirichlet distribution space.

21. A computer program product, wherein when the computer program is run on a computer, the computer is enabled to perform the method according to any one of claims 1 to 6, the method according to claim 7 or 8, or the method according to claim 9 or 10.

22. A computer-readable storage medium, comprising a program, wherein when the program is run on a computer, the computer is enabled to perform the method according to any one of claims 1 to 6, the method according to claim 7 or 8, or the method according to claim 9 or 10.

23. A network device, comprising a processor and a memory, wherein the processor is coupled to the memory;

the memory is configured to store a program; and
the processor is configured to execute the program in the memory, to enable the network device to perform the method according to any one of claims 1 to 6 or the method according to claim 7 or 8.

24. An execution device, comprising a processor and a memory, wherein the processor is coupled to the memory;

the memory is configured to store a program; and
the processor is configured to execute the program in the memory, to enable the execution device to perform the method according to claim 9 or 10.

EP 4 401 007 A1

Intelligent information chain

Smart product and industry application

| Translation/ Text analysis/... | Speech/Vision/ Image/... |

| Data | Data processing: | Data training/Machine learning/Deep learning | Search/Inference/ Decision-making | ... |

Infrastructure | Sensor | Smart chip | Basic platform | ...

IT value chain

FIG. 1a

FIG. 1b

Requirement
information
corresponding to a
target neural network

| Client 210 | | Network device 220 |

Automatically
generated target
neural network

FIG. 2a

Automatically
generated target
neural network

Database 240 → Training device 230 ← Network device 220

Execution device 250

Trained target
neural network

Calculation module 251

↔ Data storage
system 260

FIG. 2b

First neural network

Input layer

First neural architecture cell

First neural architecture cell

First neural architecture cell

Classifier

Feature extraction network

FIG. 3a

EP 4 401 007 A1

Note: Neural network modules are in dashed-line boxes

FIG. 3b

A network device obtains first indication information corresponding to a first neural architecture cell, where the first indication information only indicates a probability and/or a quantity of times that each of k to-be-selected neural network modules appears in a neural architecture cell — A1

The network device generates the first neural architecture cell based on the first indication information and the k to-be-selected neural network modules, and generates a first neural network based on the generated first neural architecture cell, where the first neural network includes at least one first neural architecture cell — A2

The network device obtains a target score corresponding to the first indication information, where the target score indicates performance, of the first neural network corresponding to the first indication information, in processing target data — A3

The network device obtains second indication information from a plurality of pieces of first indication information based on a plurality of target scores corresponding to the plurality of pieces of first indication information, and obtains a target neural network corresponding to the second indication information — A4

FIG. 3c

A network device obtains first indication information corresponding to a first neural architecture cell, where the first indication information indicates a probability and/or a quantity of times that each of k to-be-selected neural network modules appears in the first neural architecture cell — 401

The network device generates the first neural architecture cell based on the first indication information and the k to-be-selected neural network modules — 402

The network device generates a first neural network based on the first neural architecture cell, where the first neural network includes at least one first neural architecture cell — 403

The network device obtains a target score corresponding to the first indication information, where the target score indicates performance, of the first neural network corresponding to the first indication information, in processing target data — 404

The network device obtains new first indication information — 405

The network device generates a new first neural network based on the new first indication information — 406

The network device obtains a new target score corresponding to the new first indication information, where the new target score indicates performance, of the new first neural network corresponding to the new first indication information, in processing the target data — 407

The network device obtains second indication information from a plurality of pieces of first indication information based on a plurality of target scores corresponding to the plurality of pieces of first indication information, and obtains a target neural network corresponding to the second indication information — 408

FIG. 4

Rounded target result (namely, seven second values corresponding to seven to-be-selected neural network modules):
0, 0, 2, 1, 2, 0, and 3

Seven to-be-selected neural network modules:

| Neural network module 1 | Neural network module 2 | Neural network module 3 | Neural network module 4 | Neural network module 5 |
|---|---|---|---|---|
| Neural network module 6 | Neural network module 7 | | | |

Eight first neural network modules configured to generate a first neural architecture cell:

| Neural network module 3 | Neural network module 3 | Neural network module 4 | Neural network module 5 | Neural network module 5 |
|---|---|---|---|---|
| Neural network module 7 | Neural network module 7 | Neural network module 7 | | |

FIG. 5

Rounded target result (namely, seven second values corresponding to seven to-be-selected neural network modules):
0, 0, 2, 1, 2, 0, and 3

Seven to-be-selected neural network modules:

| Neural network module 1 | Neural network module 2 | Neural network module 3 | Neural network module 4 | Neural network module 5 |
|---|---|---|---|---|

| Neural network module 6 | Neural network module 7 |
|---|---|

Eight first neural network modules configured to generate a first neural architecture cell:

| Neural network module 3 | Neural network module 3 | Neural network module 4 | Neural network module 5 | Neural network module 5 |
|---|---|---|---|---|

| Neural network module 7 | Neural network module 7 | Neural network module 7 |
|---|---|---|

FIG. 6

## First neural network

| Input layer | First neural architecture cell | First neural architecture cell | First neural architecture cell | Classifier |

Neural network module 1

Neural architecture cell A

Input node

Neural network module 2

Neural network module 1

Neural network module 4

2

Neural network module 1

Input node

Neural network module 2

1

0

Neural network module 4

3

Output node

Neural network module 1

TO
FIG. 7B

FIG. 7A

EP 4 401 007 A1

FIG. 7B

EP 4 401 007 A1

1. Obtain first indication information

First indication information

*[0.2, 0.2, 0, 0.5, 0, 0.1]*

Search space corresponding to the first indication information

6: Obtain second indication information from a plurality of pieces of first indication information, and obtain a target neural network corresponding to the second indication information

No

Yes

5. Whether a first preset condition is met

First indication information

*[0.8, 0.1, 0, 0.1, 0, 0]*

2: Generate a first neural architecture cell based on the first indication information and five to-be-selected neural network modules

* * *

Three first neural architecture cells that are the same

3. Generate a first neural network based on the first neural architecture cell, and obtain a target score corresponding to the first indication information, where the target score indicates performance, of the first neural network corresponding to the first indication information, in processing target data

Target score corresponding to the first indication information

4. Update a search policy

FIG. 8

Obtain first indication information corresponding to a second neural architecture cell, where the second neural architecture cell includes N second neural network modules, each second neural network module is obtained by performing weighted summation on k to-be-processed neural network modules, and the first indication information indicates a weight of each to-be-processed neural network module in the second neural network module

901

Generate the second neural architecture cell based on the first indication information and the k to-be-processed neural network modules

902

Generate a second neural network based on the generated second neural architecture cell, where the second neural network includes at least one second neural architecture cell

903

Train the second neural network, to update the first indication information, and obtain updated first indication information until a preset condition is met

904

Generate a first neural architecture cell based on the updated first indication information and the k to-be-processed neural network modules, where the updated first indication information indicates a probability that each to-be-processed neural network module appears in the first neural architecture cell

905

Generate a target neural network based on the first neural architecture cell, where the target neural network includes at least one first neural architecture cell

906

FIG. 9

An execution device inputs target data into a target neural network  ⟋ 1001

The execution device processes the target data by using the target neural network, to obtain a prediction result corresponding to the target data, where the target neural network includes at least one first neural architecture cell, the first neural architecture cell is obtained based on first indication information and k to-be-processed neural network modules, and the first indication information indicates a probability and/or a quantity of times that each of the k to-be-processed neural network modules appears in the first neural architecture cell  ⟋ 1002

FIG. 10

Error rate

FIG. 11

FIG. 12

FIG. 13

FIG. 14

1500

Data processing apparatus

| Input unit 1501 | Processing unit 1502 |

FIG. 15

1600

Network device

1622 — Central processing unit

Power supply

1626

Wired or wireless network interface — 1650

Operating system — 1641

Data — 1644

Application program — 1642

Storage medium — 1630

Memory — 1632

Input/Output interface — 1658

FIG. 16

FIG. 18

## INTERNATIONAL SEARCH REPORT

| International application No. |
| --- |
| **PCT/CN2022/120497** |

**A. CLASSIFICATION OF SUBJECT MATTER**

G06N 3/04(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNABS, CNTXT, CNKI, ENTXT, ENTXTC, DWPI: 神经网络, 构建, 模块, 架构, 概率, 次数, neural, network, obtain+, module, structure, probability, times

**C. DOCUMENTS CONSIDERED TO BE RELEVANT**

| Category* | Citation of document, with indication, where appropriate, of the relevant passages | Relevant to claim No. |
| --- | --- | --- |
| PX | CN 113869496 A (HUAWEI TECHNOLOGIES CO., LTD.) 31 December 2021 (2021-12-31) entire document | 1-24 |
| A | CN 110288049 A (BEIJING BYTEDANCE NETWORK TECHNOLOGY CO., LTD.) 27 September 2019 (2019-09-27) entire document | 1-24 |
| A | US 2019095780 A1 (BEIJING SENSETIME TECHNOLOGY DEVELOPMENT CO., LTD.) 28 March 2019 (2019-03-28) entire document | 1-24 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 November 2022** | **25 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/120497**

| Patent document cited in search report | | | Publication date (day/month/year) | Patent family member(s) | | | Publication date (day/month/year) |
|---|---|---|---|---|---|---|---|
| CN | 113869496 | A | 31 December 2021 | None | | | |
| CN | 110288049 | A | 27 September 2019 | None | | | |
| US | 2019095780 | A1 | 28 March 2019 | JP | 2020526855 | A | 31 August 2020 |
| | | | | SG | 11201912129 T | A | 27 February 2020 |
| | | | | CN | 108229647 | A | 29 June 2018 |
| | | | | KR | 20200031163 | A | 23 March 2020 |
| | | | | WO | 2019034129 | A1 | 21 February 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111166585